# EUROPEAN PATENT APPLICATION

(11) **EP 4 459 364 A2**
(43) Date of publication of application: **06.11.2024**
(21) Application number: 24201463.7
(22) Date of filing: 11.06.2013
(51) Int. Cl.: G02C 11/00

(54) **ADAPTER FOR EYEWEAR**

(30) Priority: 11.06.2012 US 201261658211 P; 20.07.2012 US 201261673812 P; 04.09.2012 US 201261696625 P; 18.09.2012 US 201261702579 P; 02.11.2012 US 201261721890 P; 12.12.2012 US 201261736334 P; 13.12.2012 US 201261736814 P; 07.06.2013 US 201313913009
(62) Divisional of application: 13803819.5
(71) Applicant: e-Vision, LLC, Sarasota, Florida 34243 (US)
(72) Inventor: BLUM, Ronald D., Virginia, 24018 (US); BITTON, Tomer, Virginia, 24018 (US); CLOMPUS, Richard, Virginia, 24014 (US); GRAHAM, Mark, Virginia, 20175 (US); KOKONASKI, William, Washington, 98335 (US); VAUDREY, Mike, Virginia, 24060 (US); WANG, Yongping, Philadelphia, 19130 (US)
(74) Representative: Page White Farrer

(57) **Abstract**

Some embodiments of the present invention provide an adapter including one or more electronic components contained within a housing for attachment to eyewear. The housing may include a main body extending in a lengthwise direction, the main body having a front section and a rear section defining opposite ends thereof and a middle section disposed between and connecting the front section and the rear section, and an attachment portion protruding from the main body in a widthwise direction, the attachment portion configured to connect to a portion of a temple of an eyewear frame, wherein a width of the main body decreases from the middle section toward a front end of the front section.

## Description

### CROSS-REFERENCE TO RELATED APPLICATIONS

This international application claims priority to each of U.S. Provisional Application No. 61/658,211, filed June 11, 2012, titled "Hearing Assist Enabled Electronic Eyewear"; U.S. Provisional Application No. 61/673,812, filed July 20, 2012, titled "Sensing and Alarm Synchronization of Mobile Device and Electronic Eyewear"; U.S. Provisional Application No. 61/696,625, filed September 4, 2012, titled "Interactive Master Adapter (IMA) for Eyewear"; U.S. Provisional Application No. 61/702,579, filed September 18, 2012, titled "Eyewear Comprising a Wireless Keyboard"; U.S. Provisional Application No. 61/721,890, filed November 2, 2012, titled "Interactivity Adapter for Eyewear"; U.S. Provisional Application No. 61/736,334, filed December 12, 2012, titled "Enhanced Interactivity Adapter for Eyewear"; U.S. Provisional Application No. 61/736,814, filed December 13, 2012, titled "Enhanced Interactivity Adapter for Eyewear"; and U.S. Non-Provisional Application No. 13/913,009, filed June 7, 2013, titled "Adapter for Eyewear". Each of these applications is incorporated herein in its entirety by reference thereto.

### BACKGROUND

### Field

Embodiments of the present invention relate to eyewear having enhanced capabilities. For example, eyewear having an adapter providing enhanced capabilities.

### Background

For years it has been commonplace to see Bluetooth devices hanging from ears of individuals flashing a blue light, or to see individuals as far as the eye can see in an airport holding cell phones up to one's ear, tying up one's hand and arm while doing so. Computer monitors and computers have evolved from large CRT devices, to desktops, to laptops, to tablets, to wearable computers, to virtual keyboards, and virtual displays. In 2010 there were 1.4 billion personal computers in use in the world.

More digital photos are now taken with a cell phone than with conventional digital cameras. In 2010 there were 13.9 billion digital photos taken just in the USA. Presently there are 6 billion cell phones active in the world with 49% of them being smart phones. And there are over 1 million Apps now available for smart phones and tablets. In 2011 Smart phone use was up 18% for those of the age group 45 and younger.

Today very small sensors can sense, for example, the air for CO₂, infrared (IR) radiation, Ultraviolet (UV) A/UVB radiation, nuclear radiation, electromagnetic radiation, human pulse, heart rate, distance walked, speed running, temperature, humidity, location, ambient light, motion, elevation, and pressure. Every year there are over 500 million pairs of eyewear sold around the world with 100 million of the 500 million pairs being sold to individuals over the age of 45. Presently 18% of the world's population is estimated to have a hearing disorder whereby the amplification of speech could be beneficial for better understanding when being spoken too.

However, consumers continue to shy away from eyewear-based hands-free communication platforms even though such a platform today can provide excellent functionality. The reason is simple: it is the aesthetics of the hands-free eyewear platform that is presently offered. As it turns out, aesthetics trump function when it comes to eyewear for the vast majority of consumers. Presently there is no known device that can be affixed to eyewear and that provides multiple functions in a compact and aesthetically pleasing way. Therefore there is a pressing need for means to provide the appropriate aesthetics to eyewear while also providing interactive communication and other functionality. Such a means should allow fashion eyewear to remain looking like fashion eyewear now and in the future and will also allow for providing hands free functionality as discussed above.

### BRIEF SUMMARY

Some embodiments of the present invention provide an adapter including one or more electronic components contained within a housing for attachment to eyewear. The housing may include a main body extending in a lengthwise direction, the main body having a front section and a rear section defining opposite ends thereof and a middle section disposed between and connecting the front section and the rear section, and an attachment portion protruding from the main body in a widthwise direction, the attachment portion configured to connect to a portion of a temple of an eyewear frame, wherein a width of the main body decreases from the middle section toward a front end of the front section.

In some embodiments of the adapter of the present invention, the one or more electronic components are disposed within the main body of the housing.

In some embodiments of the adapter of present invention, the of electronic components contained within the housing include a camera, a wireless transceiver configured to send images captured by the camera to a remote device, and a power source to provide power to the camera and the wireless transceiver.

In some embodiments of the adapter of present invention, the of electronic components contained within the housing include a camera, a memory storage component configured to store images captured by the camera, and a power source to provide power to the camera and the memory storage component.

In some embodiments of the adapter of present invention, the of electronic components contained within the housing include a microphone, a speaker, and a wireless transceiver configured to communicate with application software of a remote device, wherein the wireless transceiver is configured to communicate audio signals between the microphone and the application software and between the speaker and the application software.

In some embodiments of the adapter of the present invention, the one or more electronic components contained within the housing include a microphone, a speaker, and a wireless transceiver configured to communicate with application software of a remote device, a power source configured to provide power to the microphone, the speaker, and the wireless transceiver, wherein the wireless transceiver is configured to communicate audio signals between the microphone and the application software and between the speaker and the application software.

In some embodiments of the adapter of the present invention, the volume within the main body is between 4,000 cubic millimeters and 12,000 cubic millimeters.

In some embodiments of the adapter of the present invention, the attachment portion comprises an inner portion configured to be disposed on an inner side of the temple when attached to the eyewear frame, and a length of the main body is longer than a length of the inner portion of the attachment portion.

In some embodiments of the adapter of the present invention, the attachment portion comprises an inner portion configured to be disposed on an inner side of the temple when attached to the eyewear frame, and a volume of the main body is greater than a volume of the inner portion of the attachment portion.

In some embodiments of the adapter of present invention, the decrease in width from the middle section toward the front end of the front section is continuous.

In some embodiments of the adapter of present invention, the attachment portion forms a saddle together with the main body, the saddle configured to receive a portion of the temple.

In some embodiments of the adapter of present invention, the adapter is configured to be affixed to the temple by seating (e.g., resting, clipping) the saddle over a top edge of the temple so that the temple is disposed within a groove of the adapter defined by the saddle.

In some embodiments of the adapter of present invention, the adapter is configured to be affixed to the temple by seating the saddle over a bottom edge of the temple so that the temple is disposed within a groove of the adapter defined by the saddle.

In some embodiments of the adapter of present invention, the front end of the main body and a rear end of the main body are separated by a distance of between 50 millimeters and 100 millimeters

In some embodiments of the adapter of present invention, an outer side surface of the front section of the main body defines a side taper from the middle section toward the front end of the front section.

In some embodiments of the adapter of present invention, the length of the taper is between 10 millimeters and 30 millimeters.

In some embodiments of the adapter of present invention, the width of the main body at the front end is between 5% and 15% of the width of the main body at the middle section.

In some embodiments of the adapter of present invention, the outer side surface is flat along the taper.

In some embodiments of the adapter of present invention, the outer side surface is curved along the taper.

In some embodiments of the adapter of present invention, the outer side surface is parallel to the lengthwise direction of extension of the main body at a front end of the curve.

In some embodiments of the adapter of present invention, the outer side surface defines at least two opposing curves along the taper.

In some embodiments of the adapter of present invention, the width of the main body decreases from a front portion of the rear section toward a rear end of the rear section, and a height of the main body decreases from the middle section toward the front end of the front section.

In some embodiments of the adapter of present invention, the width of the main body decreases from the middle section toward a rear end of the rear section, and a height of the main body decreases from the middle section toward the front end of the front section.

In some embodiments of the adapter of present invention, the housing contains an electronic component.

In some embodiments of the adapter of present invention, the electronic component is at least one of a projector, a camera, a light, a microphone, a wireless communication module, a speaker, a vibrator, a touch switch input, and a power source.

In some embodiments of the adapter of present invention, the plurality of electronic components comprises at least two of a projector, a camera, a light, a microphone, a wireless communication module, a speaker, a vibrator, a touch switch input, and a power source.

In some embodiments of the adapter of present invention, the electronic component is at least one of an accelerometer and a gyroscope.

In some embodiments of the adapter of present invention, the electronic component is configured to electrically connect to a docking station of the temple.

In some embodiments of the adapter of present invention, the housing is at least one of water resistant, sweat resistant, and salt resistant.

Some embodiments of the present invention provide an adapter including one or more electronic components contained within a housing for attachment to eyewear. The housing may include a main body extending in a lengthwise direction, the main body having a front section and a rear section defining opposite ends thereof and a middle section disposed between and connecting the front section and the rear section, and an attachment portion protruding from the main body in a widthwise direction, the attachment portion forming a saddle together with the main body, the saddle configured to receive a portion of a temple of an eyewear frame, wherein the width of the main body decreases from a front portion of the rear section toward a rear end of the rear section.

In some embodiments of the adapter of present invention, an outer side surface of the rear section of the main body defines a rear taper from the front portion of the rear section toward the rear end of the rear section.

In some embodiments of the adapter of present invention, the outer side surface is flat along the rear taper.

In some embodiments of the adapter of present invention, the outer side surface is curved along the rear taper.

In some embodiments of the adapter of present invention, the outer side surface is parallel to the lengthwise direction of extension of the main body at a rear end of the curve.

In some embodiments of the adapter of present invention, the outer side surface defines at least two opposing curves along the rear taper.

Some embodiments of the present invention provide an adapter including one or more electronic components contained within a housing for attachment to eyewear. The housing may include a main body extending in a lengthwise direction, the main body having a front section and a rear section defining opposite ends thereof and a middle section disposed between and connecting the front section and the rear section, and an attachment portion protruding from the main body in a widthwise direction, the attachment portion forming a saddle together with the main body, the saddle configured to receive a portion of a temple of an eyewear frame, wherein a height of the main body decreases from the middle section toward the front end of the front section.

In some embodiments of the adapter of present invention, an outer top surface of the front section of the main body defines a top taper from the middle section toward the front end of the front section.

In some embodiments of the adapter of present invention, the outer top surface is flat along the top taper.

In some embodiments of the adapter of present invention, the outer top surface is curved along the top taper.

In some embodiments of the adapter of present invention, the outer top surface is parallel to the lengthwise direction of extension of the main body at a front end of the curve.

In some embodiments of the adapter of present invention, the outer top surface defines at least two opposing curves along the top taper.

Some embodiments of the present invention provide an adapter including one or more electronic components contained within a housing for attachment to eyewear. The housing may include a main body extending in a lengthwise direction, the main body having a front section and a rear section defining opposite ends thereof and a middle section disposed between and connecting the front section and the rear section, and an attachment portion protruding from the main body in a widthwise direction, the attachment portion configured to connect to a portion of a temple of an eyewear frame, wherein a width of the main body decreases from the middle section toward a rear end of the rear section.

Additional features of embodiments of the invention will be set forth in the description that follows, and in part will be apparent from the description, or may be learned by practice of the invention. Both the foregoing general description and the following detailed description are exemplary and explanatory and are intended to provide further explanation of the invention as claimed.

### BRIEF DESCRIPTION OF THE FIGURES

The accompanying figures, which are incorporated herein, form part of the specification and illustrate embodiments of the present invention. Together with the description, the figures further serve to explain the principles of and to enable a person skilled in the relevant arts to make and use the invention.
FIG. 1 illustrates a charging cradle according to an embodiment presented herein.
FIG. 2 illustrates an adapter housing according to an embodiment presented herein.
FIGS. 3-6 illustrate comparative adapters.
FIGS. 7-8 illustrate a adapters according to embodiments presented herein.
FIG. 9 illustrates an eyewear system with an adapter and external audio component according to an embodiment presented herein.
FIG. 10 illustrates an eyewear system with an adapter and power cord according to an embodiment presented herein.
FIG. 11 illustrates an eyewear system with an adapter and battery pack according to an embodiment presented herein.
FIG. 12 illustrates an eyewear system with an adapter and operation bracelet according to an embodiment presented herein.
FIG. 13 illustrates an adapter including a power source according to an embodiment presented herein.
FIG. 14 illustrates an adapter having control surfaces according to an embodiment presented herein.
FIGS. 15-31 illustrate adapters according to embodiments presented herein.
FIG. 32 illustrates a flow chart for determining a prolonged eye closure according to an embodiment presented herein.
FIGS. 33-35 illustrate adapters according to embodiments presented herein.
FIG. 36 illustrates a muscle movement associated with movement of a person's eye according to an embodiment presented herein.
FIG. 37 illustrates an adapter having a control surface on an inside surface thereof, next to a wearer's skin, according to an embodiment presented herein.
FIG. 38 illustrates eyewear having a control surface on the inside of an eyewear temple next to a wearer's skin, according to an embodiment presented herein.
FIG. 39 illustrates a flow chart for determining skin movement of a wearer according to an embodiment presented herein.
FIGS. 40-42 illustrate eyewear systems according to embodiments presented herein.
FIG. 43 illustrates a channel structure of a hollow temple according to an embodiment presented herein.
FIGS. 44 and 45 illustrate eyewear systems according to embodiments presented herein.
FIG. 46 illustrates an eyewear system with a remote device according to an embodiment presented herein.
FIGS. 47-60 illustrate eyewear systems according to embodiments presented herein.
FIG. 61 illustrates a displayed output of an eyewear system according to an embodiment presented herein.
FIG. 62 illustrates an eyewear system according to an embodiment presented herein.
FIGS. 63-65 illustrate eyewear systems for projecting images according to embodiments presented herein.

### DETAILED DESCRIPTION

Embodiments of the present invention will now be described in detail with reference to embodiments thereof as illustrated in the accompanying drawings, in which like reference numerals are used to indicate identical or functionally similar elements. References to "one embodiment", "an embodiment", "some embodiments", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. Further, the term "comprise" and its variants (e.g., "comprising", "comprises") as used herein denotes an "open" transition, which includes recited features or components, and does not exclude other, unrecited features or components.

The following examples are illustrative, but not limiting, of the present invention. Other suitable modifications and adaptations of the variety of conditions and parameters normally encountered in the field, and which would be apparent to those skilled in the art, are within the spirit and scope of the invention.

### Adapter for Eyewear

Embodiments of the invention disclosed herein provide a way to convert today's or tomorrow's fashion eyewear into a hands free interactive communication platform, while doing it in such a way that the eyewear appearance remains mostly unchanged and further that the control mechanism is largely not visible or noticeable. One has to pay attention to notice the device that is providing the intelligence and interactivity. By this it is meant that the fashion eyewear stands out and the device according to embodiments of the present invention blends and takes a back seat aesthetically to the fashion eyewear frame.

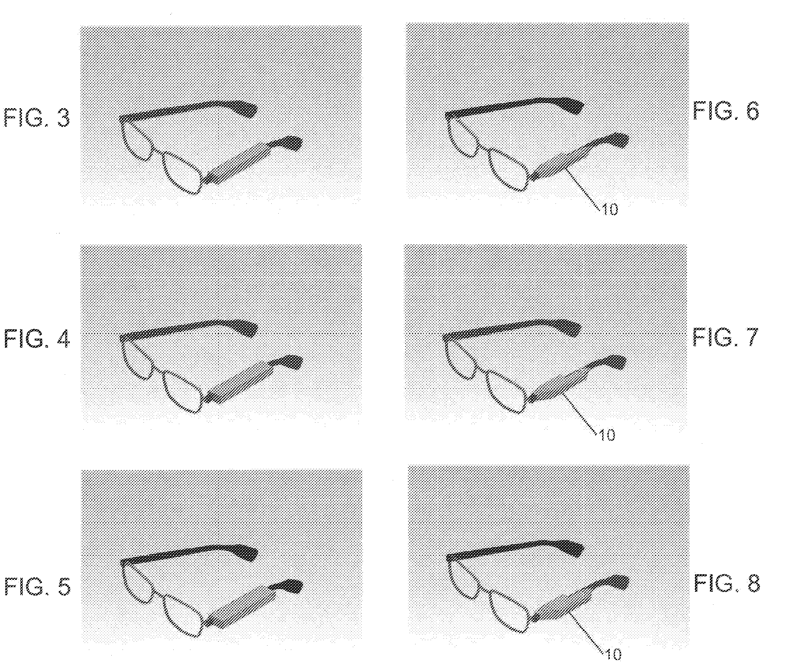

Overall outside dimensions of some potential eyewear-augmentation device housings are equal in the front, the middle and the back of the device as in both outer and inner measurements. For example, the overall outside thickness may be similar to that of the illustrative comparisons shown in FIGS. 3-5. These designs can be contrasted with embodiments of the present invention shown in FIGS. 6-8. Generally, embodiments of the present invention disclosed herein have been prototyped and the incorporated electronics are shown in scaled illustrations herein. The embodiments described herein combine form factor and functionality to achieve a viable commercial product.

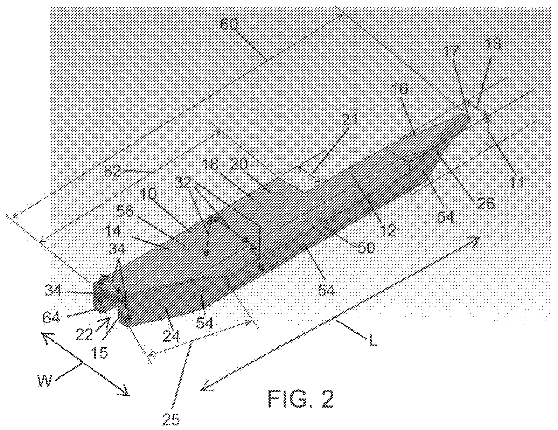

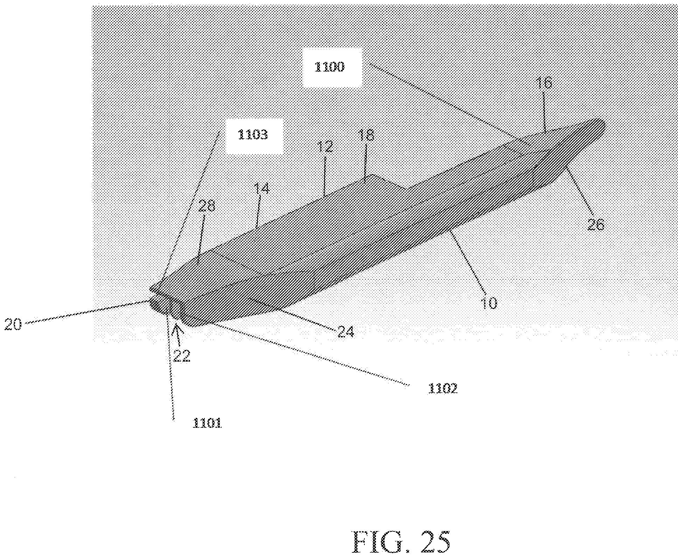

Some embodiments of the present invention provide a housing (e.g., housing 10, see, e.g., FIGS. 2 and 25) for attachment to eyewear. The housing 10 may include an adapter 50 providing enhanced capabilities to the eyewear. In some embodiments, the adapter 50 is separate from and removably attachable to the eyewear. In other words, it is not a permanent or integral part of the eyewear. In this way, the adapter can be applied to any type of eyewear, and is not limited to eyewear having preexisting electronic components. To effect an aesthetically-pleasing visual impact, the housing 10 may include a main body 12 extending in a lengthwise direction L, the main body having a front section 14 and a rear section 16 defining opposite ends thereof and a middle section 18 disposed between and connecting the front section and the rear section, and an attachment portion 20 protruding from the main body 12 in a widthwise direction W, the attachment portion 20 configured to connect to a portion of a temple of an eyewear frame, wherein a width of the main body 12 decreases from the middle section 18 (e.g., at the rear portion of the front section, where taper 24 begins) toward a front end 15 of the front section. This may help minimize the appearance of the housing 10 (e.g., when viewed from the front) when the housing 10 is attached to the temple. In some embodiments of the housing 10, the attachment portion 20 forms a saddle 22 together with the main body 12, the saddle 22 configured to receive a portion of the eyewear frame. A saddle may be any mechanism or configuration that can attach to the temple of the eyewear frame (e.g., in some embodiments, the saddle 22 defines a channel within which to receive the temple of the eyewear frame). In some embodiments, the attachment portion 20 is other than a channel, for example, a magnet, hook-and-loop fastener, snap, or other fastening mechanism. Lengthwise direction L may extend generally along a direction of extension of housing 10, and/or along the general direction of the temple of an eyewear frame (or a portion of housing 10 intended to receive or couple to the temple of an eyewear frame. The widthwise direction W may extend in a direction different from the lengthwise direction L, and need not be perpendicular to the lengthwise direction L. In some embodiments, however, the widthwise direction W is approximately perpendicular to the lengthwise direction L. Further, the widthwise direction W may be oriented in any direction about the lengthwise direction L (e.g., side-to-side (as shown in FIG. 2), up-and-down, etc.)

In some embodiments, to sufficiently house one or more electronic components, the volume of the main body 12 is between 4,000 and 10,000 cubic millimeters. The volume may be increased or decreased depending on the number and types of electronic components contained within the main body 12. For example, in an embodiment where the main body 12 contains a light, its volume may be between 5,500 and 6,000 cubic millimeters (e.g., 5,700 cubic millimeters). Also for example, in an embodiment where the main body 12 contains a light and a camera, its volume may be between 6,500 cubic millimeters and 7,000 cubic millimeters (e.g., 6,700 cubic millimeters). Also for example, in an embodiment where the main body 12 contains a light, a camera, and a projector, its volume may be between 9,500 cubic millimeters and 10,000 cubic millimeters.

In some embodiments, the length 60 of the main body 12 (i.e., the distance between the front end 15 of the front section 14 of the main body 12 and the rear end 17 of the rear section 16 of the main body 12) is between 50 millimeters and 100 millimeters (e.g., 85 millimeters). The distance may be increased or decreased depending on the number and types of electronic components contained within the main body 12.

In some embodiments, the length 62 of an inner portion 64 of the attachment portion 20 is less than the length 60 of the main body 12. When mounted on an eyeglass frame, the inner portion 64 of the attachment portion 20 may be on an inside of the frame temple, while the main body 12 may be on the outside of the frame temple. During normal use, a wearer of eyewear has limited space between the inner side of the eyewear frame temple and the wearer's face. Interference with a wearer's face between the temple and the face may cause discomfort and misalignment of the eyewear. In order to minimize such interference while still allowing sufficient volume of the main body 12 to accommodate electronic components as described, the length 62 of the inner portion 64 of the attachment portion 20 may be relatively shorter in order to remain in an area between the eyewear frame and the wearer's face that does not cause interference with the face (e.g., near a front of the eyewear frame), and the length 60 of the main body 12 may be relatively longer to accommodate the electronic components. In some embodiments, inner portion 64 is a continuous element. In some embodiments, inner portion 64 may be a plurality of elements, separated in the lengthwise direction L along main body 20 (e.g., two or more spaced-apart hooks). In some embodiments, the length 62 of the inner portion 64 is between 5 millimeters and 60 millimeters (e.g., about 40 millimeters). A longer length 62 may help make the housing more stably attach to an eyewear frame. A shorter length 62 may help make the housing less likely to interfere with a wearer's face when attached to an eyewear frame. In some embodiments, for similar reasons as described with respect to length 62, the inner portion 64 of attachment portion 20 has a volume smaller than the volume of main body 12. In some embodiments, attachment portion 20 contains no electronic components. In some embodiments, attachment portion 20 contains at least one electronic component (e.g., within inner portion 64). The configurations of housing 10, including the relative configurations of attachment portion 20 and main body 12, are not limited to those explicitly described; other configurations may be used.

In some embodiments, a width 13 of the main body 12 is between 5 millimeters and 15 millimeters at its middle section (e.g., at its widest point). The width may be increased or decreased depending on the number and types of electronic components contained within the main body 12. For example, in an embodiment where the main body 12 contains a light, the width 13 of the main body 12 may be between 5 millimeters and 10 millimeters (e.g., about 7 millimeters) at its middle section 18. Also for example, in an embodiment where the main body 12 contains a light and a camera, the width 13 of the main body 12 may be between 5 millimeters and 10 millimeters (e.g., about 7 millimeters) at its middle section 18. Also for example, in an embodiment where the main body 12 contains a light, a camera, and a projector, the width 13 of the main body 12 may be between 10 millimeters and 15 millimeters (e.g., about 11 millimeters) at its middle section 18. In these or other embodiments, the width 13 of the main body 12 may be between 0.1 millimeters and 10 millimeters (e.g., about 0.8 millimeters) at the front end 15 of the main body 12 and/or at the rear end 16 of the main body 12. For example, the width of the main body 12 may decrease from the middle section 18 to one or both of the front end 15 of the main body 12 and the rear end 17 of the main body 12 (e.g., along side taper 24). In some embodiments, the width of the main body 12 at the front end 15 may be between 5% and 15% of the width of the main body 12 at the middle section 18.

Side taper 24 may extend between the middle section 18 of the main body 12 and the front end 15 of the main body 12. Side taper 24 may effect a decrease in width from the middle section 18 to the front end 15. In some embodiments, a length 25 of the side taper 24 is between 10 millimeters and 30 millimeters (e.g., 20 millimeters). The length 25 may be increased or decreased depending on the number and types of electronic components contained within the main body 12. U.S. Design Patent Application No. 29/457,237, filed June 7, 2013, titled "Adapter for Eyewear", depicts embodiments of an adapter housing having different taper lengths, and is incorporated herein in its entirety, by reference thereto.

In some embodiments, a height 11 of the main body 12 is between 5 millimeters and 25 millimeters, or between 10 millimeters and 20 millimeters at its middle section 18 (e.g., at its highest point). The height may be increased or decreased depending on the number and types of electronic components contained within the main body 12. The height of the main body 12 may decrease from the middle section 18 to one or both of the front end 15 of the main body 12 and the rear end 17 of the main body 12 (e.g., along top taper 28). Electronic components generally become more compact as technology advances. As this occurs, the smaller volumes and dimensional ranges described herein may become able to accommodate combinations of components that now require larger volumes and dimensions.

In some embodiments, a width 21 of the attachment portion 20 is between 5 millimeters and between 15 millimeters (e.g., about 7 millimeters). The width 21 of the attachment portion 20 may be sized to accommodate the size or shape (or ranges thereof) of one or more temples of eyeglass frames.

To help protect internal components, in some embodiments of the housing 10, the housing is entirely enclosed (e.g., without an opening for a camera or projector). In some embodiments of the housing 10, the housing is entirely or partially opaque, in order to, for example, hide internal components and structure and present an aesthetically consistent and pleasing appearance. In some embodiments of the housing 10, the housing is entirely or partially transparent, in order to allow an observer to view the internal components and structure.

To help effect an aesthetically-pleasing combination of the housing 10 and eyewear frame, in some embodiments of the housing 10, an outer side surface 54 at the front section 14 of the main body 12 defines a side taper 24 from the middle section 18 toward the front end 15 of the front section 14 such that a cross-sectional area of housing 10 decreases along the side taper 24 as it approaches the front end 15. In some embodiments of the housing 10, the outer side surface 54 is flat along the side taper 24. In some embodiments of the housing 10, the taper defines an uninterrupted surface (e.g., is void of apertures and the like) in order to present an aesthetically consistent and pleasing appearance.

To help effect an aesthetically-pleasing combination of the housing 10 and eyewear frame, in some embodiments of the housing 10, the outer side surface 54 is curved along the side taper 24 and is parallel to the lengthwise direction of extension of the main body 12 at a front end of the curve. In some embodiments the outer side surface 54 defines at least two opposing curves along the side taper 24.

In some embodiments of the housing 10, the width of the main body 12 decreases from a front portion of the rear section 16 toward a rear end of the rear section 16, and a height of the main body decreases from the middle section 18 toward the front end 15 of the front section 14. This may help minimize the appearance of the housing 10 (e.g., when viewed from the front or rear) when the housing 10 is attached to a temple of an eyewear frame.

In some embodiments of the housing 10, the housing 10 contains an electronic component that can provide additional capabilities to the eyewear, as described elsewhere herein. For example, the electronic component may be at least one of a projector, a camera, a light (e.g., a nightlight), a microphone, a wireless communication module, a speaker, a vibrator, a touch switch input, a power source, an accelerometer and a gyroscope. In some embodiments the electronic component is configured to electrically connect to a docking station of the temple.

In some embodiments of the housing 10, the housing 10 is at least one of water resistant, sweat resistant, and salt resistant, to help maintain the integrity of the internal electronic components, and prevent damage.

Some embodiments of the present invention provide an adapter 50 including one or more electronic components and a housing 10 for attachment to eyewear. The adapter 50 may provide enhanced capabilities to the eyewear (e.g., by one or more electronic components contained within the housing). For example, the adapter 50 may include a camera, a wireless transceiver configured to send images captured by the camera to a remote device (e.g., via BlueTooth^{®} or other wireless communication protocol), and a power source to provide power to the camera and the wireless transceiver. This may enable a user to use the adapter 50 unobtrusively capture images from the perspective of the adapter 50. In some embodiments, instead of or in addition to the wireless transceiver, the adapter may include an internal memory component (e.g., a computer-readable recording medium, such as a solid-state disk). Also for example, the adapter 50 may include a microphone and a speaker, a wireless transceiver configured to communicate with application software of a remote device and a power source to provide power to the microphone, the speaker, and the wireless transceiver. This can allow communication of audio signals between the microphone and the application software and between the speaker and the application software. In this way, a user can, for example, participate in a phone call or otherwise audibly interact with a phone or other remote device through the microphone and speaker of the adapter 50.

To effect an aesthetically-pleasing visual impact, the housing 10 may include an main body 12 extending in a lengthwise direction, the main body having a front 14 section and a rear section 16 defining opposite ends thereof and a middle section 18 disposed between and connecting the front section 14 and the rear section 16, and an attachment portion 20 protruding from the main body in a widthwise direction, the attachment portion 20 configured to connect to a portion of a temple of an eyewear frame (e.g., attachment portion may form a saddle 22 together with the main body 12, the saddle 22 configured to receive a portion of a temple of an eyewear frame). In some embodiments the width of the main body 12 decreases from a front portion of the rear section 16 toward a rear end of the rear section 16. This may help minimize the appearance of the housing 10 (e.g., when viewed from the rear) when the housing 10 is attached to a temple of an eyewear frame. For example, the width of the main body at the front end 15 of the front section 14 may be between 5% and 15% of the width of the main body at the middle section 18. In some embodiments, the decrease in width from the middle section 18 toward the front end 15 of the front section 14 is continuous (e.g., has no corners or angular edges).

To help effect an aesthetically-pleasing combination of the housing 10 and eyewear frame, in some embodiments of the housing 10, an outer side surface 54 at the rear section 16 of the main body 12 defines a rear taper 26 from the front portion of the rear section 16 toward the rear end of the rear section 16 such that a cross-sectional area of housing 10 decreases along the rear taper 26 as it approaches the rear end. Some embodiments do not include this rear taper, however (e.g., some embodiments may include one or more tapers in the front section 14 of housing 10, but no taper in the rear section 16 of housing 10). In some embodiments of the housing 10 of present invention, the outer side surface 54 is flat along the rear taper 26.

To help effect an aesthetically-pleasing combination of the housing 10 and eyewear frame, in some embodiments of the housing 10 the outer side surface 54 is curved along the rear taper 26 and parallel to the lengthwise direction of extension of the main body 12 at a rear end of the curve. In some embodiments, the outer side surface 54 defines at least two opposing curves along the rear taper 26.

Some embodiments of the present invention provide an adapter 50 including one or more electronic components and a housing 10 for attachment to eyewear. The housing 10 may include an adapter 50 providing enhanced capabilities to the eyewear. To effect an aesthetically-pleasing visual impact, the housing 10 may include a main body 12 extending in a lengthwise direction, the main body 12 having a front section 14 and a rear section 16 defining opposite ends thereof and a middle section 18 disposed between and connecting the front section 14 and the rear section 16, and an attachment portion 20 protruding from the main body in a widthwise direction, the attachment portion 20 forming a saddle 22 together with the main body 12, the saddle 22 configured to receive a portion of a temple of an eyewear frame, wherein a height of the main body 12 decreases from the middle section 18 toward the front end 15 of the front section 14. This may help minimize the appearance of the housing 10 (e.g., when viewed from the front) when the housing 10 is attached to a temple of an eyewear frame.

To help effect an aesthetically-pleasing combination of the housing 10 and eyewear frame, in some embodiments of the housing 10 an outer top surface 56 at the front section 14 of the main body 12 defines a top taper 28 from the middle section 18 toward the front end 15 of the front section 14 such that a cross-sectional area of housing 10 decreases along the top taper 28 as it approaches the front end 15. In some embodiments of the housing 10, the outer top surface 56 is flat along the top taper 28.

To help effect an aesthetically-pleasing combination of the housing and eyewear frame, in some embodiments of the housing 10 of present invention, the outer top surface 56 is curved along the top taper 28 and is parallel to the lengthwise direction of extension of the main body 12 at a front end of the curve. In some embodiments the outer top surface 56 defines at least two opposing curves along the top taper 28.

In general, terms used herein are used consistently with the below descriptions. These descriptions are not exhaustive or exclusive definitions, but are provided to help contextualize the description of embodiments of the present invention.

Accelerometer: For example, a device used to measure acceleration. For example, using a spring and weight, when the change in the weight's location is converted to acceleration; using a dampener to derive acceleration; using MEMS (microelectromechanical systems) technology to measure acceleration, etc.

Adapter (or Interactivity Adapter, Electronic Module, Interactive Master Adapter (IMA)): As used herein, an adapter is a device to provide eyewear with additional hands free functionality through internal electronic components of the adapter (as described in further detail elsewhere herein). In some embodiments an adapter may be permanently attached to the eyewear, attachable to and detachable from the eyewear, or integrated within the eyewear. Adapters are described herein with different reference characters for ease of description, but the components and features of the embodiments described for any adapter are interchangeable and combinable with other adapters described.

In some embodiments, an adapter can be mounted on the left temple, the right temple, the front, or any combination thereof (e.g., using two or more adapters at the same time). The adapter can be designed to affix to mostly all eyewear or the adapter can be designed to dock into a docking station (e.g., of the eyewear). The docking station may or may not provide electrical power to the adapter. The adapter can be completely self-contained or may be partially self-contained.

In some embodiments, adapter is moisture and perspiration resistant. In some embodiments the adapter is water proof and perspiration proof.

Some exemplary applications of embodiments of the present invention (e.g., of adapters described herein) include:
a. Tell time.
b. Act as an alarm clock.
c. Alert the user of calendar events.
d. Replace existing keyless entry to house.
e. Replace existing keyless entry to car.
f. Replace existing keyless start of car.
g. Used for identification reasons.
h. Enhance hearing.
i. Recognize voice.
j . Recognize faces.
k. Open a garage door.
1. Replace an IR remote control.
m. Act as a phone.
n. Act as a personal navigation system.
o. Act as a music player.
p. Count steps (Pedometer).
q. Measure vital signs.
r. Display a virtual keyboard.
s. Give sound and/or haptic feedback.
t. Send and receive messages (text messages, e-mails, etc.).
u. Project an image or images.
v. Project a hologram.
w. Project a virtual touch screen.
x. Display messages on the operation bracelet.
y. Measure environmental such as temperature, humidity, radiation, etc.
z. Alert a nodding driver.
aa. Display a reading light.
bb. Accept third party apps.
cc. Emergency alert in case of a fall or attack.

Some exemplary phenomenon that embodiments of the present invention (e.g., of adapters described herein) may be capable of sensing include:
a. CO₂
b. IR radiation
c. UVA / UVB radiation
d. Nuclear radiation
e. Electromagnetic radiation
f. Human pulse rate
g. Heart rate
h. Tell how far you have walked
i. Tell how fast you are running
j. Temperature
k. Humidity location
l. Ambient light
m. Motion
n. Incline
o. Elevation
p. Pressure
q. Air Pollution

Audio driver: For example, a device that processes an analog audio signal, converts it to a digital signal, processes it and converts it back to an analog signal. For example, this device can output at any given point (be it after the sampling process of the analog signal, after the digital converter, after the signal processor, after the digital to analog converter, or at the exit). An audio driver may be implemented using, for example, a silicon chip, and integrated circuit (IC), an audio CODEC, an A/D (analog-to-digital) converter in line with a DSP in line with a D/A (digital-to-analog) in line with an amplifier, etc.

Blink of an eye: For example, the normal/natural open and closing of the eye (normal blink), which takes approximately 250 milliseconds in total time, and can range from taking approximately 100 to 400 milliseconds. The closure part normally takes 80 milliseconds (of lid closure). The normal blink of the eye occurs approximately every 5 seconds, or 12 times per minute.

Camera: For example, an optical device that is able to record scenes, either still or moving, in a manner that allows an electronic component to make a record of the scene. A camera may include, for example: a lens or lens array, an image sensor, an image processor, a memory module, etc.

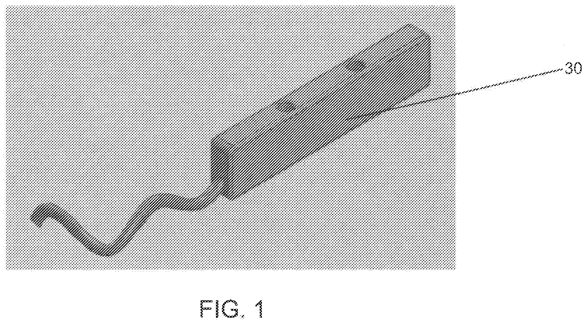

Charging: A device may be rechargeable, and may be charged, for example, by the following techniques: connecting a power plug onto the tip of an object (e.g., an eyewear temple); using a charger that will accept a device or portion thereof (e.g., a charger with a cradle 30 (see FIG. 1) that will accept the adapter 50 disclosed in some embodiments herein once removed from the temple (see FIG. 1)), and will accept power from, for example, an AC adapter, a USB port, etc.

Contact recognition: For example, a process where software, hardware or any combination of the two uses a picture, a sound bit, or any combination of the two, in order to recognize a person from a predetermined list, including, but not limited to: a phone's contact list, a social media list (e.g., a Facebook^{®} friend list, a list of followers on Twitter^{®}, etc.). The process might use a third party application for image/voice processing, or might be self-contained.

Control surface (e.g., located near temporal facial skin of wearer): For example, a sensing surface (e.g., located on a surface of an adapter closest to a wearer's face). A control surface can sense, for example, the movement of a wearer's skin directly or indirectly. In some embodiments, a control surface therefore can sense a direction or command provided by a wearer of the adapter, for example, by the wearer causing an exaggerated eye closure, forced eye closure, or prolonged eye closure.

Design (e.g., form factor): A housing 10 for a device (e.g., an adapter 50) may have a form factor that will enable it to blend seamlessly with a pair of glasses.

The device may be designed, for example, as shown in FIG. 2. As shown in, for example, FIGS. 2 and 25, and elsewhere throughout the figures, the front section 14 side of the adapter housing 10 may have curves down to the surface of the temple, as if creating a thin, smooth edge (safe to the touch). The back section 16 side of the adapter housing 10 may also have curves down to a thin, smooth edge (safe to the touch). The middle section 28 of the adapter housing 10 is wider at both ends, in order to contain, for example, electronic components, lenses, batteries, etc. Also, the front section 14 top of the adapter housing 10 has curves to fit the top of a temple. In addition, the back section 16 top of the adapter housing 10 has curves up and down in order to better fit the contour of the temple. This design makes the adapter housing 10 appear seamless on the glasses, while still leaving room for internal electronic components. As shown in the exemplary embodiment of FIG. 2, the circumference of the middle section 18 (about arrows 32) is approximately (2*12.9+8.3+8.3) = 42.4 millimeters, while the front section 14 has a circumference (about arrows 34) of (2*6.68+6.55+6.55) = 26.46 millimeters, about half the circumference of the middle section 18. In some embodiments, the IMA would be made out of, for example, carbon fiber, rubber, silicone, plastic, aluminum, metal, etc.

FIGS. 6-8 show exemplary embodiments of adapter housing 10, showing exemplary curvatures of the device. In the figures it can be seen that, for example, when the appropriate electronic components (e.g., wireless communication, LED light, microphone, speaker, vibrator, accelerometer, audio driver) are integrated, the design of FIGS. 6-8 is more fashionable than the design of FIGS. 3-5.

Docking station: For example, a location in which the adapter may interconnect to the eyewear temple. A docking station may acts like, for example, a power connector, a data connector, a mechanical stability connector, etc. This connection may be made in a fashion that will enable the system to remain moisture/salt/sweat proof. A docking station may include, for example, two through holes in the temple into which two corresponding pins on the bottom of the adapter snap, a standard mini/micro USB through connector in the temple combined with a pin through hole in the temple, and corresponding counterparts in the bottom of the adapter that will snap into place, etc.

Exaggerated eye closure: For example, a forced eye closure that can be of a short or long duration. The term exaggerated eye closure as used herein is used to describe an eye closure involving greater use and more pronounced movement of the muscles on the side of the face in the temporal region of the closed eye than the weak movement (if any) associated with a natural or normal eye blink. The skin in this temporal region and about the eye will move as the muscle moves. When the forced or exaggerated eye closure happens, the skin in the temporal area is pulled forward. Exaggerated eye closure is not considered a blink.

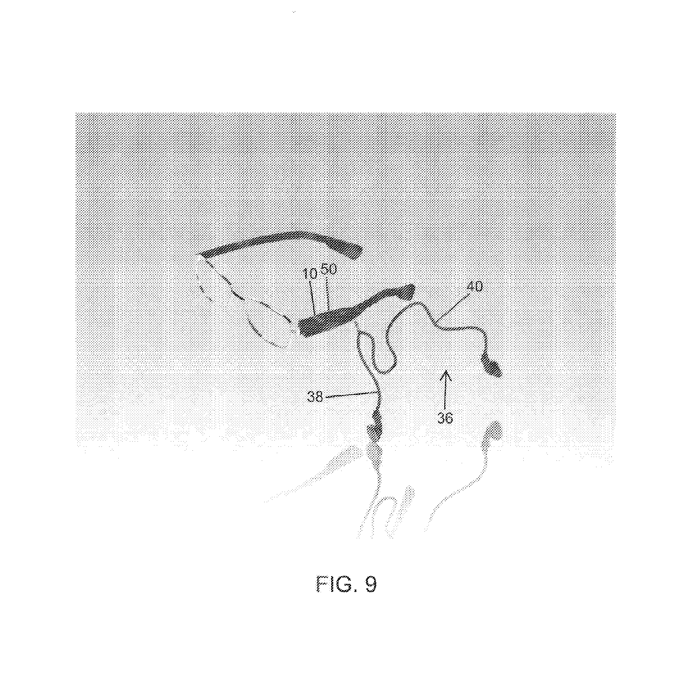

External audio connectivity: For example, a standard audio jack hole (for example: 2.5 millimeters, 3.5 millimeters etc.). In some embodiments, such external audio connectivity may be located within the adapter 50. An external audio connector may allow for a mono, stereo, quadraphonic, etc. audio system to be connected via jack to the adapter 50. For example, as depicted in the FIG. 9, in some embodiments an external audio component 36 (e.g., a stereo ear bud headphone system) may be connected to the adapter 50. In some embodiments, one 38 of the leads of the headphones may be significantly shorter than the other 40, so that it can be more easily placed in the ear closest to the adapter 50.

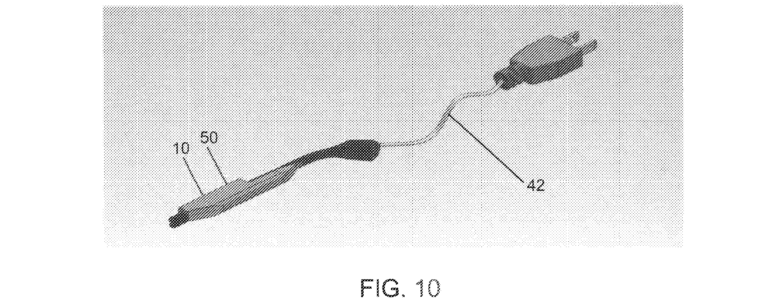

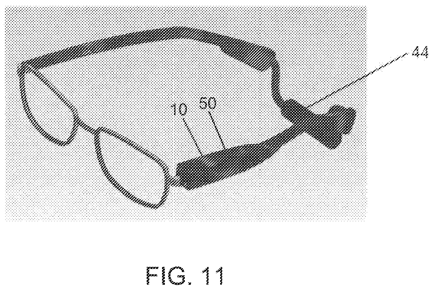

External power source: For example, a power source not located in the adapter housing 10 or in the Temple. In some embodiments, this can be an AC power cord 42 directly or indirectly connected to the adapter housing 10, temple or any combination of the two (see FIG. 10 depicting an adapter 50 connected to the AC power cord 42 through the temple); an external battery pack 44 directly or indirectly connected to the adapter 50, temple or any combination of the two (e.g., a battery pack placed in what is known in the art as a Croakie^{®}) (see FIG. 11 an external battery pack 44 connected via a Croakie^{®}). An external power source may allow the user both a longer work time and mobility.

Eye closure: The closing of an eye. As used herein eye closure is not a blink, but can be an exaggerated closing of the eye or a prolonged closing of an eye.

Heads up display: For example, a display that allows the user to view data without having to change his line of sight. In some embodiments, for example, such a display may allow for the display of, for example, information, pictures, videos, etc.

Housing: For example, a container to hold (house) an element. For example, an adapter may have a housing defining an outer shell or surface thereof. The adapter may contain electronic components and other parts of the adapter. Electronic components and other parts of the adapter may be internally or externally coupled to the adapter. The housing itself, however, is a separate component from such electronic components or other parts. This is the case whether the electronic components or other parts are fully contained within or protrude from the housing, and whether the electronic components or other parts are fully or partially embedded in or not embedded in the housing.

LED light: A light emitting diode. For example, an electro-optical transducer that converts electrical energy to light. LED's come in various shapes and sizes including, but not limited to: 3mm round, 5mm round, 8mm round, square, etc. As technology advances, an LED light may also refer to any other such transducer that converts electrical energy to light including, but not limited to: OLED (organic light emitting diode), AMOLED (active matrix organic light emitting diode), SUPER AMOLED, etc.

Microphone: For example, an acoustic to electric transducer. Such a device converts sound to an electronic signal. This is made by ways including, but not limited to: electromagnetic induction (dynamic microphone), capacitance change (condenser microphone), piezoelectric change, etc. As the art advances, new types of microphones are becoming available such as, for example, a MEMS microphone.

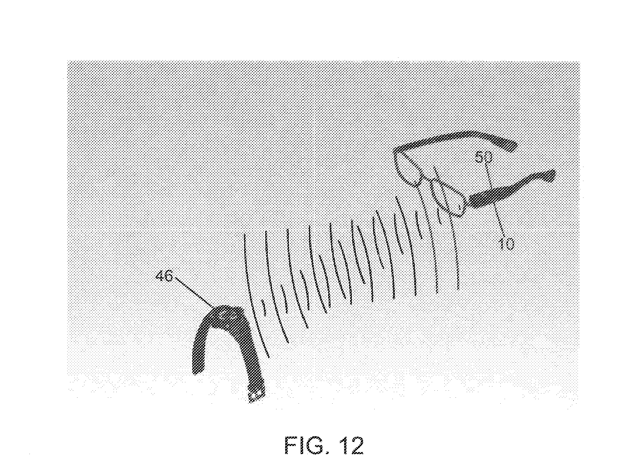

Operation bracelet: For example, a device worn on one's forearm (see FIG. 12). In some embodiments such a device may communicate with the adapter either using wires, wirelessly, or by any combination of the two.

An operation bracelet (e.g., operation bracelet 46) may provide additional or ultimate controls over the adapter (e.g., adapter 50). The communication between the adapter and the operation bracelet 46 may be bidirectional. In some embodiments the operation bracelet 46 may control the adapter, and the adapter may send information to the operation bracelet 46 including, but not limited to: battery state, picture being taken, mode of operation, etc.

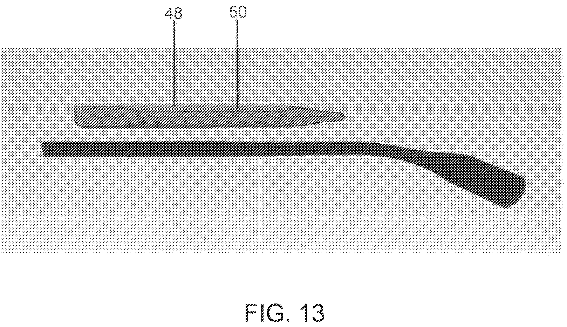

Power source: For example, a power source that may power an adapter 50 according to embodiments of the present invention. A power source 48, may be located, for example, in adapter 50, in the docking station, or in any combination of the two (see FIG. 13, where the power source 48 (e.g., batteries) is located in the adapter 50). A power source might be, for example, a photoelectric (solar) cell; a piezoelectric (motion activated) cell; primary batteries (non-rechargeable) including, but not limited to: alkaline cells, lithium air cells, Zinc air cell, lithium water cell etc.; secondary batteries (rechargeable) including, but not limited to: Lithium-ion cells, lithium-polymer cells, NiMh cells, Nanowire cells, lead-acid cell, etc.

Projector: For example, a device that can project an image or images on solid, liquid, gas, or other type of medium. A projector may be able to project using any kind of technology, including but not limited to: DLP (digital laser projection), LCD projector, LED projector, etc. A projector may be able to display, for example, a 2D image or images, a 3D image or images, a hologram, etc.

Prolonged Eye Closure (e.g., prolonged closing of an eye or eyes): Prolonged eye closure is longer than that of a natural blink of an eye (which is approximately 80 milliseconds). In some embodiments prolonged eye closure can be distinguished from a natural blink of the eye by timing the eye closure and comparing it to that of a natural blink eye closure. Prolonged eye closure is not considered a blink.

Serviceability: In some embodiments, the adapter 50 may be fully serviceable. For example, every part of the device may be capable of replacement by a trained technician. The adapter housing 50 may be constructed of two, three, or more parts that interconnect and create a smooth slick surface.

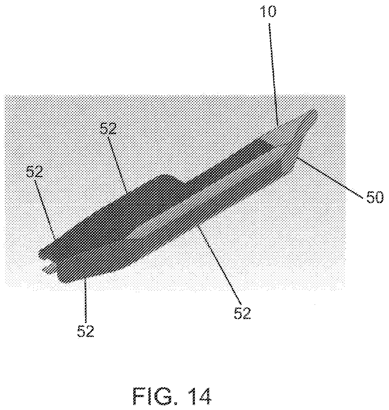

Smart control surface: For example, a switch that only needs to be touched by an object to operate. In some embodiments a smart control surface may be a basic type of tactile sensor. For example, a touch screen, an on/off button, etc. Different kinds of smart control surfaces may be used in some embodiments of the present invention, for example, a capacitance touch switch - using body capacitance change to operate; a resistance touch switch - closing a circuit using a conductive surface (for example: a finger, a meta pen, etc.); a piezoelectric switch - detection of current from piezo movement of conductors; etc. In some embodiments, a control surface 52 can be located, for example, on the top portion of the adapter 50, on the bottom portion of the adapter 50, on either side of the adapter 50, or any combination of the aforementioned locations (see FIG. 14). In some embodiments a control surface 52 is user friendly and programmable by the user. For example, the user can choose the behavior of the adapter 50, when the surface 52 is touched, swiped, tapped, etc. Programming the surface can be done, for example, by the manufacturer, by a designated app, by a third party app, etc. The surface may have the capability to control operation modes (e.g., all operation modes) including, but not limited to: turning the device on/off; turning a function on/off; taking a picture; starting/stopping the video recorder, etc. An example of an operating scenario for the smart control surface 52 is as follows: a swipe on the side surface of the adapter 50, in the forward direction will turn the projector with the virtual keyboard on. A swipe in the opposite direction on the same surface will turn the projector off. A double slide (slide twice) on the side surface will turn the camera on. A tap on the side temple when the camera is on will take a picture of the scene. A double tap on the side surface will activate/deactivate the video function of the camera. A swipe in the opposite direction (backwards swipe) will turn the camera off. A tap on the top surface will turn voice control on. A backwards swipe on the top surface will be used to answer/hang-up a call. A long tap (longer than 3 seconds) will turn the LED light on and off. A forward slide on the top surface will enable/disable the hearing assist feature.

Speaker: For example, a transducer that converts an electric signal to sound. Speakers are common in electronics small and large. A speaker can be, for example, mechanical, electromechanical, electric, or any combination of the above. New developments in the field of speakers have allowed the miniaturization of speakers, including but not limited to MEMS speakers.

Vibrator: For example, a transducer that converts an electric signal to physical vibration. Vibrators are common in devices including, but not limited to: pagers, cell phones, tablets, etc. In some embodiments, the conversion may be done, for example, by: rotating a motor with a flywheel at the end, thus creating vibrations; moving a linear motor back and forth, thus creating vibrations; using a piezoelectric device to vibrate two conducting plates against each other; using a silicon wafer with MEMS technology to create vibrations; etc.

Wireless transceiver: For example, a device that enables wireless communication to and from (receiving and transmitting data). Amongst these devices are, for example only: a Bluetooth transceiver, a WIFI transceiver, a ZigBee^{®} transceiver, an UWB (ultra wide band) transceiver, RFID transceiver, etc.

Some embodiments of the present invention provide an adapter for eyewear includes a housing having a front section, a middle section, and a rear section; and a plurality of electronic components disposed within the housing; wherein the adapter is configured to be affixed to eyewear, and wherein the front section of the housing has a smaller cross-sectional area than the middle section of the housing, taken perpendicular to a direction of extension of the eyewear frame (e.g., perpendicular to a direction of extension of the adapter housing (e.g., lengthwise direction L, shown in FIG. 2), in some embodiments) (e.g., approximately 10% smaller, 50% smaller, 70% smaller, etc.).

In some embodiments of the adapter, it includes a plurality of electronic components disposed within the housing.

In some embodiments of the adapter, it is configured to be affixed to the temple by seating the adapter over a top edge of the temple so that the temple is disposed within a groove of the adapter.

In some embodiments of the adapter, it is configured to be affixed to the temple by seating the adapter over a bottom edge of the temple so that the temple is disposed within a groove of the adapter.

In some embodiments of the adapter, it is configured to be docked into a docking station.

In some embodiments of the adapter, it is water proof.

In some embodiments of the adapter, wherein it is sweat resistant.

In some embodiments of the adapter, wherein it is salt resistant.

In some embodiments of the adapter, at least one of the electronic components is a projector.

In some embodiments of the adapter, at least one of the electronic components is a camera.

In some embodiments of the adapter, the camera is a still camera.

In some embodiments of the adapter, the camera is a video camera.

In some embodiments of the adapter, at least one of the electronic components is a nightlight.

In some embodiments of the adapter, the nightlight is a light-emitting diode.

In some embodiments of the adapter, the nightlight is an organic light-emitting diode.

In some embodiments of the adapter, at least one of the electronic components is a Bluetooth^{®} chip.

In some embodiments of the adapter, at least one of the electronic components is a microphone.

In some embodiments of the adapter, the microphone is directional.

In some embodiments of the adapter, at least one of the electronic components is a speaker.

In some embodiments of the adapter, at least one of the electronic components is an audio driver.

In some embodiments of the adapter, at least one of the electronic components is a vibrator.

In some embodiments of the adapter, at least one of the electronic components is an accelerometer.

In some embodiments of the adapter, at least one of the electronic components is a gyroscope.

In some embodiments of the adapter, at least one of the electronic components is a power source.

In some embodiments of the adapter, the power source is at least one of a solar cell, a fuel cell, a battery, and a piezoelectric element.

In some embodiments of the adapter, at least one of the electronic components is a touch switch.

In some embodiments of the adapter, the touch switch is at least one of a membrane switch and a capacitance switch.

In some embodiments of the adapter, the housing is thinner in the front section than in the middle section.

In some embodiments of the adapter, two or more of the electronic components are speakers.

In some embodiments of the adapter, the projector is configured to project a virtual keyboard.

In some embodiments of the adapter, the projector is configured to project a virtual display.

In some embodiments of the adapter, the display is configured to display information received from the Internet.

In some embodiments of the adapter, the adapter is configured to communicate with a remote display.

In some embodiments of the adapter, wherein the adapter is configured to send image data to a remote display for display on the remote display.

In some embodiments of the adapter, the remote display is a display of one of a cell phone, a tablet, a computer, a watch, a wrist bracelet, or a ring.

In some embodiments of the adapter, the remote display is associated with a remote controller.

In some embodiments of the adapter, the remote controller is configured to control a camera associated with the adapter.

In some embodiments of the adapter, a plurality of the electronic components comprises an array of a plurality of microphones.

In some embodiments of the adapter, it further includes an accessory connector, wherein the accessory connector is configured to connect an accessory electrical cable to receive power.

In some embodiments of the adapter, the adapter is configured to receive power via the accessory connector, which is configured to receive power from an AC electrical outlet via the accessory electrical cable.

In some embodiments of the adapter, it further includes an accessory connector, wherein the accessory connector is configured to connect an accessory electrical cable to receive power from an AC electrical outlet via the accessory electrical cable.

In some embodiments of the adapter, the power source is at least one of a solar cell, a fuel cell, a battery, or a piezoelectric element.

In some embodiments of the adapter, the power source it is coupled to a tether connected to the eyewear.

In some embodiments of the adapter, the housing is moisture resistant.

In some embodiments of the adapter, the housing is perspiration resistant.

In some embodiments of the adapter, the includes has a control surface, wherein the control surface is configured to sense movement of skin of a wearer on the temporal side of the face of the wearer closest to the adapter.

In some embodiments of the adapter, it further includes a sensor and a timer, wherein the adapter is configured to sense a prolonged eye closure of a wearer based on output of the sensor and the timer, and wherein the adapter is configured to distinguish the prolonged eye closure from that of a normal blink of the eye of the wearer.

In some embodiments of the adapter, the control surface is configured to effect at least one of taking a photo, taking a video, emailing a photo, emailing a video, connecting to the Internet, turning on a remote cell phone, turning off a remote cell phone, turning on an electrical switch, turning off an electrical switch, turning on an electrical device, and turning off an electrical device.

In some embodiments of the adapter, the control surface is configured to turn on or off an electrical device associated with the adapter.

Some embodiments of the present invention provide an adapter for eyewear, including a housing having a front section, a middle section, and a rear section, and an electronic component disposed within the housing, wherein the adapter is configured to be affixed to a temple of an eyewear frame, and wherein a front end of the front section of the housing has a smaller circumference than the middle section of the housing, taken about an outer surface of the adapter in a plane perpendicular to a direction of extension of the eyewear frame. Circumference may describe the length of outer surfaces of the adapter, with any missing surfaces (e.g., due to the recess for a temple of an eyewear frame, as shown in FIG. 2) being considered to contribute a length equal to that of a line connecting ends of the adjacent surfaces, as described elsewhere herein.

In some embodiments of the adapter, the circumference of the front end of the front section is about half the circumference of the middle section.

Some embodiments of the present invention provide eyewear including a frame and a control surface defining a portion of an inner side of the frame closest to a wearer's face, wherein the control surface is configured to sense movement of skin of a wearer's face, and wherein the control surface is configured to cause an electrical switch to be turned on or off based on the movement of the skin of the wearer's face.

Some embodiments of the present invention provide eyewear including a sensor configured to sense eye closure of a wearer, and a timer, wherein the eyewear is configured to sense a prolonged eye closure of a wearer based on output of the sensor and the timer, and wherein the eyewear is configured to distinguish the prolonged eye closure from that of a normal blink of the eye of the wearer.

In some embodiments of the eyewear, it is configured to transmit a control signal based on the sensed prolonged eye closure.

Some embodiments of the present invention provide an eyewear system including an eyewear frame and an adapter coupled to the eyewear frame, wherein the adapter includes a housing having a front section, a middle section, and a rear section, and a plurality of electronic components disposed within the housing, and wherein the front section of the housing has a smaller cross-sectional area than the middle section of the housing.

In some embodiments of the eyewear system, the eyewear frame includes a temple portion including a docking station configured to accept the adapter.

In some embodiments of the eyewear system, the eyewear frame comprises a front portion including a docking station configured to accept the adapter.

In some embodiments of the eyewear system, the frame includes a power source, and the adapter is powered by the power source.

In some embodiments of the eyewear system, the frame is configured to detachably receive the adapter.

In some embodiments of the eyewear system, the housing is configured to provide a sweat barrier.

In some embodiments of the eyewear system, the housing is configured to provide a moisture resistance barrier.

In some embodiments of the eyewear system, it further includes an ear bud coupled to the adapter.

In some embodiments of the eyewear system, the ear bud is coupled to the adapter by an audio cable.

In some embodiments of the eyewear system, the audio cable is retractable and extendable.

In some embodiments of the eyewear system, it further includes an accessory electrical cable coupled to the adapter, wherein the accessory electrical cable is configured to be plugged into an AC electrical outlet to provide power to the adapter.

In some embodiments of the eyewear system, it further includes an audio cable coupled to two ear buds, wherein the audio cable is coupled to the adapter.

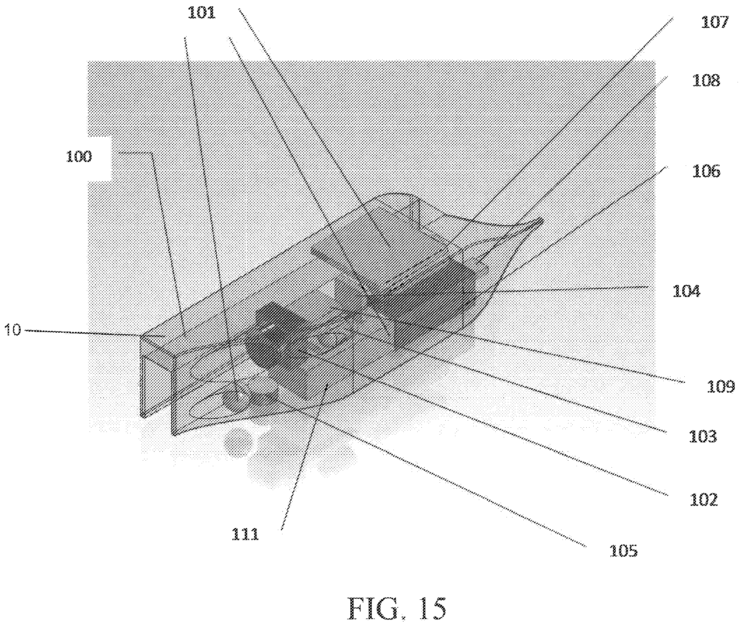

In a first exemplary embodiment and method (see FIG. 15) an adapter 100 includes a built in projector 101, a photo/video camera 102, an LED light 103, a wireless transceiver 104, a microphone 105, a speaker 106, a vibrator 107, an accelerometer 108, an audio driver (A/D, Amplifier, D/A etc.) 109, additional power source 110, and a smart control surface 111.

This first embodiment and method will enable a user to communicate with a wirelessly transmitting device including, but not limited to, a cell phone, a computer, a radio, etc. It will deliver audio to and from the device. The embodiment and method will also supply the ability to amplify sound (known in the art as hearing assist) using only the internal parts such as the microphone 105, the audio driver/amplifier 109, and the speaker 106. This embodiment and method will also enable the user to have a bright LED light 103 attached, detached or affixed to the device, communicating with the device, and turned on/off using the device and device accessories. This LED light 103 will be helpful in situations including, but not limited to: reading a book/paper in a dark environment, finding a keyhole in the dark, finding your way in a dark place (stairway, hallway, etc.), etc. Furthermore, this embodiment and method will have a vibrator 107 for tactile feedback, and to convey messages to the user. Some examples of this are: getting a phone call when your connected phone is in silent mode or an emergency call/message in a noisy environment. Another use of this vibrator 107 is to awake a nodding (falling asleep) driver using tactile feedback as a warning. The device will also include an accelerometer 108 that will be able to relay the relative acceleration of the device (measure motion).

The first embodiment and method will also be able to take still images and videos using the built in camera 102 or any other camera communicating with the device. One way of taking the still picture/video is by swiping the smart control surface 111 on the device in a predetermined manner; another way of taking a still picture/video is by way of an external communication device that might be able to display the image being taken and save it. This external communication device may include devices such as, but not limited to: a cell phone, an operation bracelet, a computer, etc. The camera 102 can also be used in 3rd party applications including, but not limited to: Facebook", Twitter^{®}, Instagram^{®}, facial recognition software, etc. The camera 102 will also be used as a part in the process of contact recognition, as described elsewhere herein. Also, in this embodiment and method the camera 102 will be used adjacently with the projector 101 in order to create a virtual keyboard/touch screen, as will be described. In some embodiments, when a video is being recorded or a photograph is being taken (e.g., by camera 102 of adapter 100), a light (e.g., the LED light 103) may be turned on to indicate that recording or photographing is taking place. For example, the LED light 103 may output a red-colored light when adapter 100 is recording or photographing. This LED may help to make the subject being recorded or photographed aware of the recording or photographing activity, to increase privacy (e.g., of the public) and minimize incidences of surreptitious recording or photographing.

This first embodiment and method will also include a projector 101 (2D, 3D, or holographic). The projector 101 will be used to display both still and moving images in front of the device, either on a solid, liquid, gas, and other medium. The projector 101 will be used to display information from a wirelessly connected device including, but not limited to: a text message, an internet browser, a calendar appointment, watching movies, drawing, painting, still image displaying, etc. The projector 101 will be an integral part of the virtual keyboard/touch screen as will be described.

The first embodiment and method will include a virtual keyboard/touch screen. A virtual keyboard/touch screen is a keyboard/touch screen that is not real, rather it is projected onto a surface (solid, liquid, gas, or any other type or medium), and processed as a real, physical keyboard/touch screen. This will be accomplished by using the projector 101 to project an image onto a surface (solid, liquid, gas, or any other type or medium). The projector 101 will be stabilized by an electro-mechanic/electronic/mechanical assembly, and the image will remain relatively still. This will be accomplished by using the output of the accelerometer 108 in combination with micro stabilizing apparatuses including, but not limited to: micro stepper motors, MEMS units, micro magnetic flux motors, micro linear motors, etc. The camera 102 will take images of the projected image; software, hardware, or any combination of the two, will process the changes in the image and will associate the change with motion of the hand or finger on a specific key. The process will inform the device of the key pressed/area in the touch screen pressed. Also, a feedback will be given to the user by way of sound, tactile feedback, etc.

In addition, this first embodiment and method will supply an external power source. The power source will enable the device to work continually without the need of a recharge. This is not to say that the adapter 100 will not work on its power source, but to emphasize that an external power source can be connected to the adapter 100 to extend its work time.

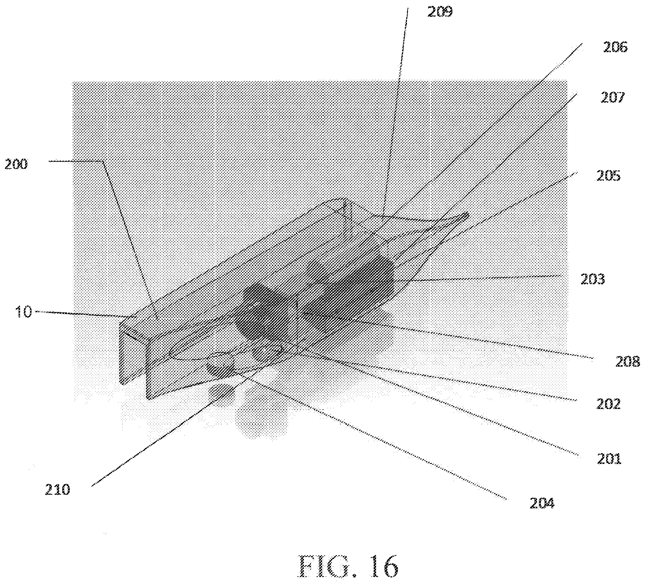

In a second embodiment and method (see FIG. 16) an adapter 200 includes a photo/video camera 201, an LED light 202, a wireless transceiver 203, a microphone 204, a speaker 205, a vibrator 206, an accelerometer 207, an audio driver (A/D, Amplifier, D/A etc.) 208, additional power source 209, and a smart control surface 210.

This second embodiment and method will enable a user to communicate with a wirelessly transmitting device including, but not limited to, a cell phone, a computer, a radio, etc. It will deliver audio to and from the device. The embodiment and method will also supply the ability to amplify sound (known in the art as hearing assist) using only the internal parts such as the microphone 204, the audio driver/amplifier 208, and the speaker 205. This embodiment and method will also enable the user to have a bright LED light 202 attached, detached or affixed to the device, communicating with the device, and turned on/off using the device and device accessories. This LED light 202 will be helpful in situations including, but not limited to: reading a book/paper in a dark environment, finding a keyhole in the dark, finding your way in a dark place (stairway, hallway, etc.), etc. Furthermore, this embodiment and method will have a vibrator 206 for tactile feedback, and to convey messages to the user. Some examples of this are: getting a phone call when your connected phone is silent mode or an emergency call/message in a noisy environment. Another use of this vibrator 206 is to awake a nodding (falling asleep) driver using tactile feedback as a warning. The device will also include an accelerometer 207 that will be able to relay the relative acceleration of the device (measure motion).

The second embodiment and method will also be able to take still images and videos using the built in camera 201 or any other camera communicating with the device. One way of taking the still picture/ video is by swiping the smart control surface 210 on the device in a predetermined manner; another way of taking a still picture/video is by way of an external communication device that might be able to display the image being taken and save it. This external communication device may include devices including, but not limited to: a cell phone, an operation bracelet, a computer, etc. The camera 201 can also be used in third party applications including, but not limited to: Facebook", Twitter^{®}, Instagram^{®},facial recognition software, etc. The camera 201 will also be used as a part in the process of contact recognition, as described elsewhere.

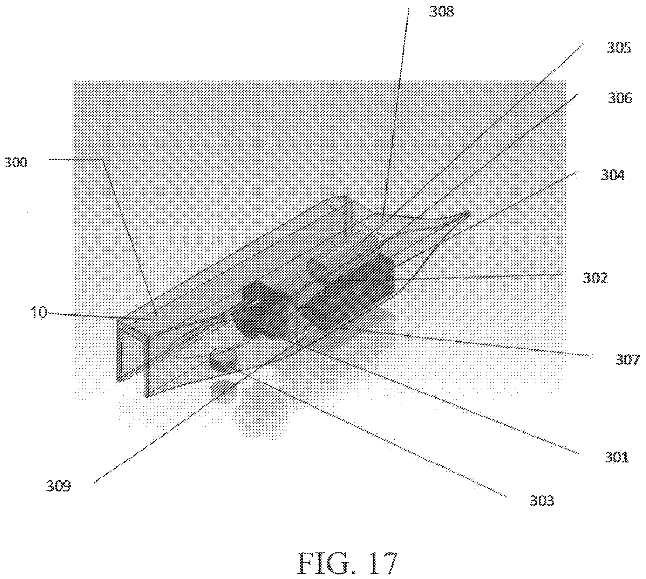

In a third embodiment and method (see FIG. 17) an adapter 300 includes a photo/video camera 301, a wireless transceiver 302, a microphone 303, a speaker 304, a vibrator 305, an accelerometer 306, an audio driver (A/D, Amplifier, D/A etc.) 307, additional power source 308, and a smart control surface 309.

This third embodiment and method will enable a user to communicate with a wirelessly transmitting device including, but not limited to, a cell phone, a computer, a radio, etc. It will deliver audio to and from the device. The embodiment and method will also supply the ability to amplify sound (known in the art as hearing assist) using only the internal parts such as the microphone 303, the audio driver/amplifier 307, and the speaker 304. Furthermore, this embodiment and method will have a vibrator 305 for tactile feedback, and to convey messages to the user. Some examples of this are: getting a phone call when your connected phone is in silent mode or an emergency call/message in a noisy environment. Another use of this vibrator 305 is to awake a nodding (falling asleep) driver using tactile feedback as a warning. The device will also include an accelerometer 306 that will be able to relay the relative acceleration of the device (measure motion).

The third embodiment and method will also be able to take still images and videos using the built in camera 301 or any other camera communicating with the device. One way of taking the still picture/ video is by swiping the smart control surface 309 on the device in a predetermined manner; another way of taking a still picture/video is by way of an external communication device that might be able to display the image being taken and save it. This external communication device may include devices, but not limited to: a cell phone, an operation bracelet, a computer, etc. The camera 301 can also be used in 3rd party applications including, but not limited to: Facebook", Twitter^{®}, Instagram^{®}, facial recognition software, etc. The camera 301 will also be used as a part in the process of contact recognition, as described elsewhere.

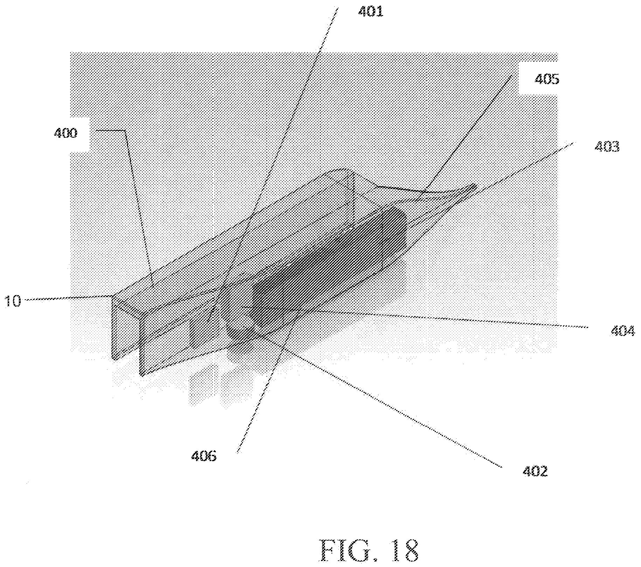

In a fourth embodiment and method (see FIG. 18) an adapter 400 includes a wireless transceiver 401, a microphone 402, a speaker 403, an audio driver (A/D, Amplifier, D/A etc.) 404, additional power source 405, and a smart control surface 406.

This fourth embodiment and method will enable a user to communicate with a wirelessly transmitting device including, but not limited to, a cell phone, a computer, a radio, etc. It will deliver audio to and from the device. The embodiment and method will also supply the ability to amplify sound (known in the art as hearing assist) using only the internal parts such as the microphone 402, the audio driver/amplifier 404, and the speaker 403.

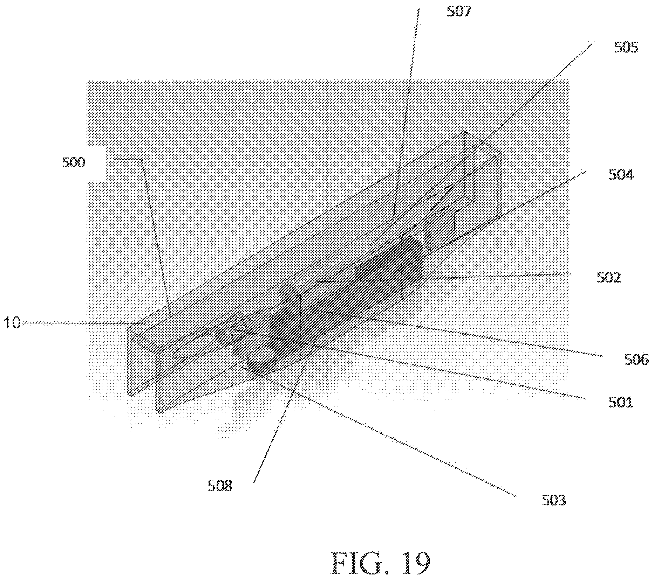

In a fifth embodiment and method (see FIG. 19) an adapter 500 includes an LED light 501, a wireless transceiver 502, a microphone 503, a speaker 504, a vibrator 505, an audio driver (A/D, Amplifier, D/A etc.) 506, additional power source 507, and a smart control surface 508.

This fifth embodiment and method will enable a user to communicate with a wirelessly transmitting device including, but not limited to, a cell phone, a computer, a radio, etc. It will deliver audio to and from the device. The embodiment and method will also supply the ability to amplify sound (known in the art as hearing assist) using only the internal parts such as the microphone 503, the audio driver/amplifier 506, and the speaker 504. This embodiment and method will also enable the user to have a bright LED light 501 attached, detached or affixed to the device, communicating with the device, and turned on/off using the device and device accessories. This LED light 501 will be helpful in situations including, but not limited to: reading a book/paper in a dark environment, finding a keyhole in the dark, finding your way in a dark place (stairway, hallway, etc.), etc. Furthermore, this embodiment and method will have a vibrator 505 for tactile feedback, and to convey messages to the user. Some examples of this are: getting a phone call when your connected phone is in silent mode or an emergency call/message in a noisy environment. Another use of this vibrator 505 is to awake a nodding (falling asleep) driver using tactile feedback as a warning.

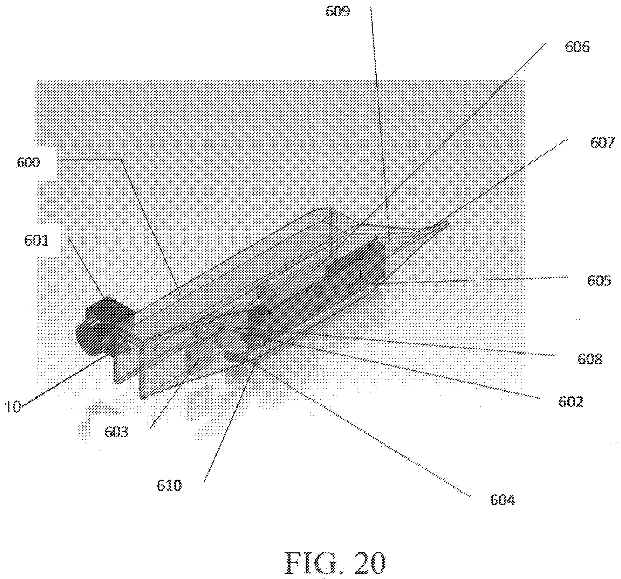

In a sixth embodiment and method (see FIG. 20) an adapter 600 includes a photo/video camera 601, an LED light 602, a wireless transceiver 602, a microphone 604, a speaker 605, a vibrator 606, an accelerometer 607, an audio driver (A/D, Amplifier, D/A etc.) 608, additional power source 609, and a smart control surface 610.

This sixth embodiment and method will enable a user to communicate with a wirelessly transmitting device including, but not limited to, a cell phone, a computer, a radio, etc. It will deliver audio to and from the device. The embodiment and method will also supply the ability to amplify sound (known in the art as hearing assist) using only the internal parts such as the microphone 604, the audio driver/amplifier 608, and the speaker 605. This embodiment and method will also enable the user to have a bright LED light 602 attached, detached or affixed to the device, communicating with the device, and turned on/off using the device and device accessories. This LED light 602 will be helpful in situations including, but not limited to: reading a book/paper in a dark environment, finding a keyhole in the dark, finding your way in a dark place (stairway, hallway, etc.), etc. Furthermore, this embodiment and method will have a vibrator 606 for tactile feedback, and to convey messages to the user. Some examples of this are: getting a phone call when your connected phone is in silent mode or an emergency call/message in a noisy environment. Another use of this vibrator 606 is to awake a nodding (falling asleep) driver using tactile feedback as a warning. The device will also include an accelerometer 607 that will be able to relay the relative acceleration of the device (measure motion).

The sixth embodiment and method will also be able to take still images and videos using the built in camera 601 that will be mounted on a pop up mechanism or any other camera communicating with the device. One way of taking the still picture/video is by swiping the smart control surface 610 on the device in a predetermined manner; another way of taking a still picture/video is by way of an external communication device that might be able to display the image being taken and save it. This external communication device may include devices such as, but not limited to: a cell phone, an operation bracelet, a computer, etc. The camera 601 can also be used in 3rd party applications including, but not limited to: Facebook", Twitter^{®}, Instagram^{®}, facial recognition software, etc. The camera 601 will also be used as a part in the process of contact recognition, as described elsewhere.

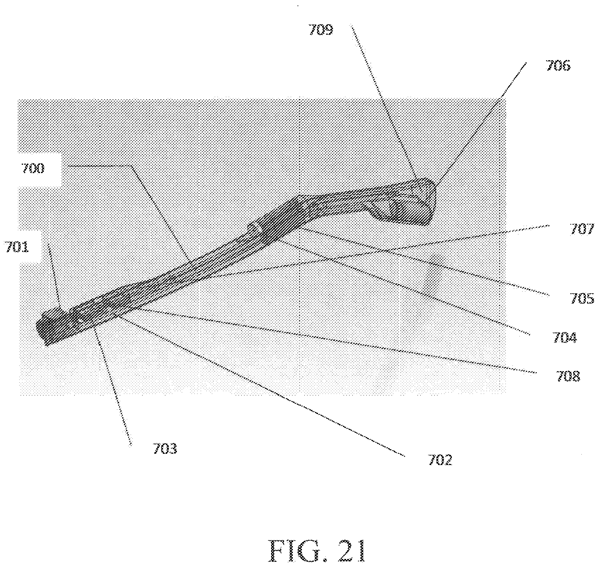

In a seventh embodiment and method (see FIG. 21) an embedded adapter embedded in the temple 700 includes a photo/video camera 701, a wireless transceiver 703, a microphone 704, a speaker 705, a vibrator 706, an accelerometer 707, an audio driver (A/D, Amplifier, D/A etc.) 708, additional power source 709, and a smart control surface 702.

This seventh embodiment and method will enable a user to communicate with a wirelessly transmitting device including, but not limited to, a cell phone, a computer, a radio, etc. It will deliver audio to and from the device. The embodiment and method will also supply the ability to amplify sound (known in the art as hearing assist) using only the internal parts such as the microphone 704, the audio driver/amplifier 708, and the speaker 705. Furthermore, this embodiment and method will have a vibrator 706 for tactile feedback, and to convey messages to the user. Some examples of this are: getting a phone call when your connected phone is in silent mode or an emergency call/message in a noisy environment. Another use of this vibrator 706 is to awake a nodding (falling asleep) driver using tactile feedback as a warning. The device will also include an accelerometer 707 that will be able to relay the relative acceleration of the device (measure motion).

The seventh embodiment and method will also be able to take still images and videos using the built in camera 701 that will be mounted on a pop up mechanism or any other camera communicating with the device. One way of taking the still picture/video is by swiping the smart control surface 702 on the device in a predetermined manner; another way of taking a still picture/video is by way of an external communication device that might be able to display the image being taken and save it. This external communication device may include devices, such as, but not limited to: a cell phone, an operation bracelet, a computer, etc. The camera 701 can also be used in 3rd party applications including, but not limited to: Facebook^{®}, Twitter^{®}, Instagram^{®}, facial recognition software, etc. The camera 701 will also be used as a part in the process of contact recognition, as described elsewhere.

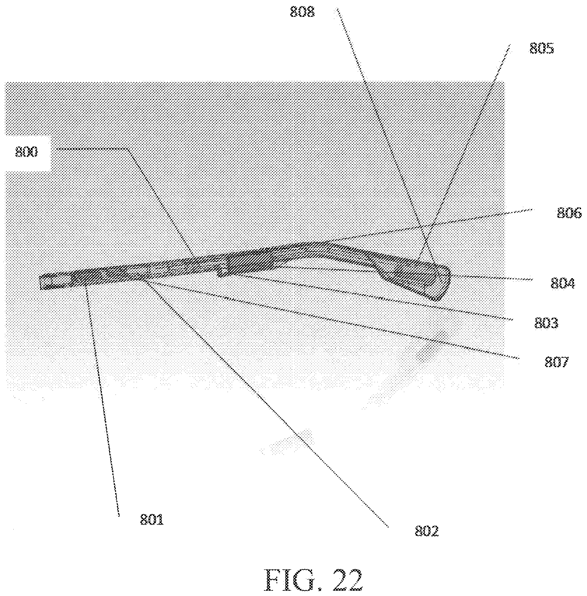

In an eighth embodiment and method (see FIG. 22) an adapter 800 includes a wireless transceiver 801, a microphone 803, a speaker 804, a vibrator 805, an accelerometer 806, an audio driver (A/D, Amplifier, D/A etc.) 807, additional power source 808, and a smart control surface 802.

This eighth embodiment and method will enable a user to communicate with a wirelessly transmitting device including, but not limited to, a cell phone, a computer, a radio, etc. It will deliver audio to and from the device. The embodiment and method will also supply the ability to amplify sound (known in the art as hearing assist) using only the internal parts such as the microphone 803, the audio driver/amplifier 807, and the speaker 804. Furthermore, this embodiment and method will have a vibrator 805 for tactile feedback, and to convey messages to the user. Some examples of this are: getting a phone call when your connected phone is in silent mode or an emergency call/message in a noisy environment. Another use of this vibrator 805 is to awake a nodding (falling asleep) driver using tactile feedback as a warning. The device will also include an accelerometer 806 that will be able to relay the relative acceleration of the device (measure motion).

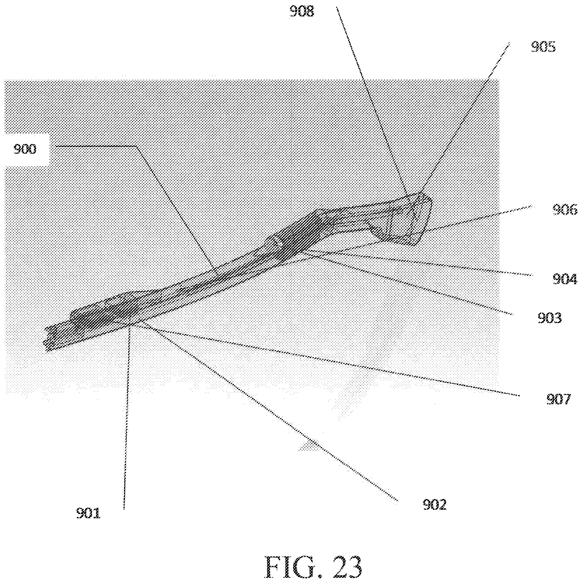

In a ninth embodiment and method (see FIG. 23) an adapter 900includes a wireless transceiver 901, a microphone 903, a speaker 904, a vibrator 905, an accelerometer 906, an audio driver (A/D, Amplifier, D/A etc.) 907, additional power source 908, and a smart control surface 902.

This ninth embodiment and method will enable a user to communicate with a wirelessly transmitting device including, but not limited to, a cell phone, a computer, a radio, etc. It will deliver audio to and from the device. The embodiment and method will also supply the ability to amplify sound (known in the art as hearing assist) using only the internal parts such as the microphone 903, the audio driver/amplifier 907, and the speaker 904. Furthermore, this embodiment and method will have a vibrator 905 for tactile feedback, and to convey messages to the user. Some examples of this are: getting a phone call when your connected phone is in silent mode or an emergency call/message in a noisy environment. Another use of this vibrator 905 is to awake a nodding (falling asleep) driver using tactile feedback as a warning. The device will also include an accelerometer 906 that will be able to relay the relative acceleration of the device (measure motion).

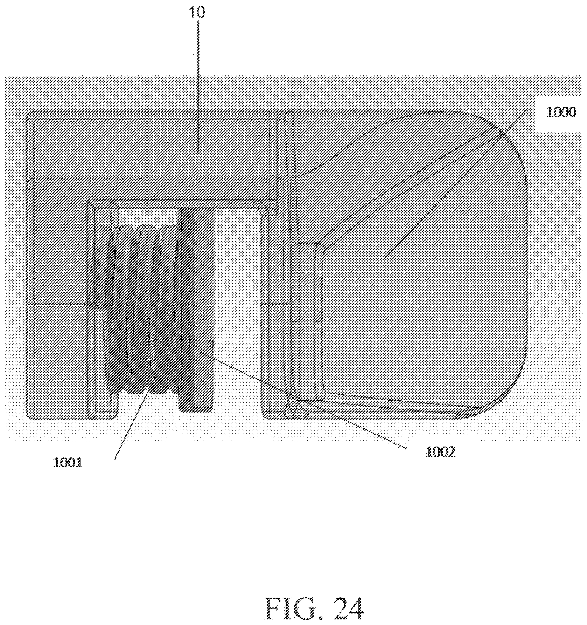

In a tenth embodiment and method (see FIG. 24) an adapter 1000 may be connected to an eyewear frame using a spring assembly 1001 and a contact plate 1002 in a manner that allows the adapter 1000 to be mounted on most temples in the market snugly. The temple will be inserted between the contact plate and housing of the adapter 1000, and the adapter 1000 will be held in place by sheer force.

In an eleventh embodiment and method (see FIG. 25) an adapter 1100 may be connected to an eyewear frame using a spring assembly 1101 and a contact plate 1102 and a forward groove/slit/prone in a manner that allows the adapter 1100 to be mounted on most wire frames in the market snugly. The temple will be inserted between the contact plate and housing of the adapter 1100, and the adapter 1100 will be held in place by sheer force. Also, the front of the wire frame will fit inside the forward slit/prone in a manner that will prohibit the adapter 1100 from turning about its axis, and might have a forward clip to keep the adapter 1100 from moving in back and forth on the temple. The forward slit/prone can be, for example, a slit in the front of the housing of the adapter 1100; one, two or more protruding parts on the frontal part of the housing of the adapter 1100; magnetic plates in the frontal part of the adapter 1100; electromechanical plates in the frontal part of the adapter 1100; etc.

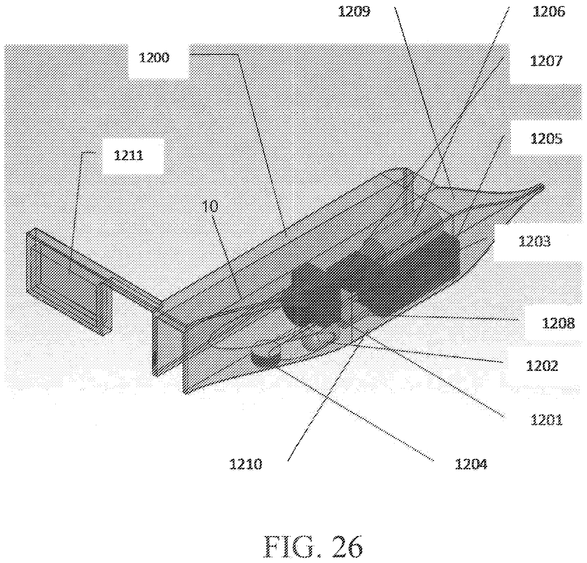

In a twelfth embodiment and method (see FIGS. 26-29) an adapter 1200 includes a photo/video camera 1201, an LED light 1202, a wireless transceiver 1203, a microphone 1204, a speaker 1205, a vibrator 1206, an accelerometer 1207, an audio driver (A/D, Amplifier, D/A etc.) 1208, additional power source 1209, a smart control surface 1210, and a heads up display 1211.

This twelfth embodiment and method will enable a user to communicate with a wirelessly transmitting device including, but not limited to, a cell phone, a computer, a radio, etc. It will deliver audio to and from the device. The embodiment and method will also supply the ability to amplify sound (known in the art as hearing assist) using only the internal parts such as the microphone 1204, the audio driver/amplifier 1208, and the speaker 1205. This embodiment and method will also enable the user to have a bright LED light 1202 attached, detached or affixed to the device, communicating with the device, and turned on/off using the device and device accessories. This LED light 1202 will be helpful in situations including, but not limited to: reading a book/paper in a dark environment, finding a keyhole in the dark, finding your way in a dark place (stairway, hallway, etc.), etc. Furthermore, this embodiment and method will have a vibrator 1206 for tactile feedback, and to convey messages to the user. Some examples of this are: getting a phone call when your connected phone is in silent mode or an emergency call/message in a noisy environment. Another use of this vibrator 1206 is to awake a nodding (falling asleep) driver using tactile feedback as a warning. The device will also include an accelerometer 1207 that will be able to relay the relative acceleration of the device (measure motion).

The twelfth embodiment and method will also be able to take still images and videos using the built in camera 1201 or any other camera communicating with the device. One way of taking the still picture/video is by swiping the smart control surface 1210 on the device in a predetermined manner; another way of taking a still picture/video is by way of an external communication device that might be able to display the image being taken and save it. This external communication device may include devices such as, but not limited to: a cell phone, an operation bracelet, a computer, etc. The camera 1201 can also be used in 3rd party applications including, but not limited to: Facebook^{®}, Twitter^{®}, Instagram^{®}, facial recognition software, etc. The camera 1201 will also be used as a part in the process of contact recognition, as described elsewhere.

The twelfth embodiment and method will also have the capability of displaying on a heads up display 1211. This heads up display will be, for example, affixed to the adapter 1200, detachable, or any combination of the two. The option of a heads up display will, for example: enable the user to view information in real time; enable the user to view the image being photographed; enable the user to conduct a video call; enable the user to view diagnostics (e.g., during surgery etc.); enable the user to experience an augmented reality; create a virtual keyboard that is displayed on the heads up display and processed by the camera's hardware, software, or any combination of the two.

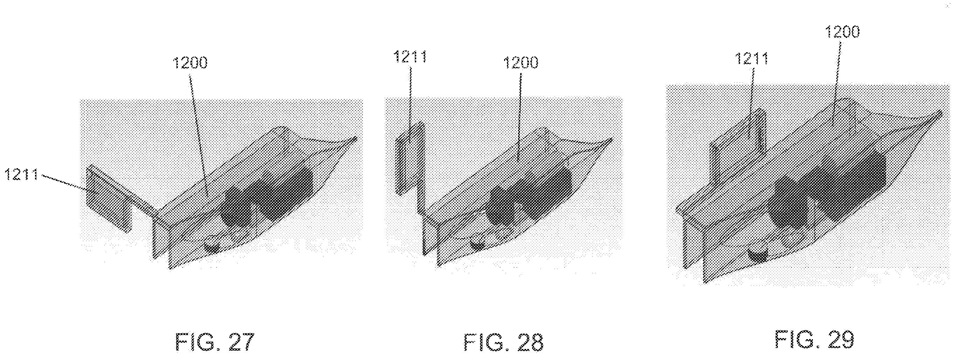

This twelfth embodiment and method might also have the option of folding back the heads up display 1211. The screen may be foldable, for example, as it appears in FIGS. 27-29. The user will be able to fold the screen so that the screen will not obstruct the user's field of view.

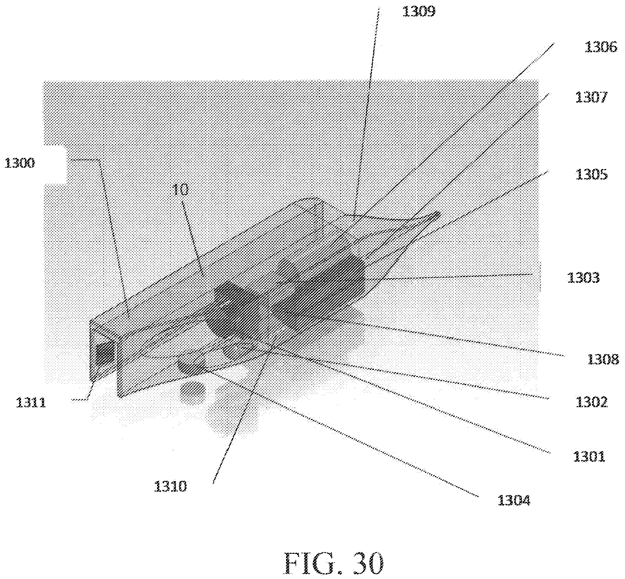

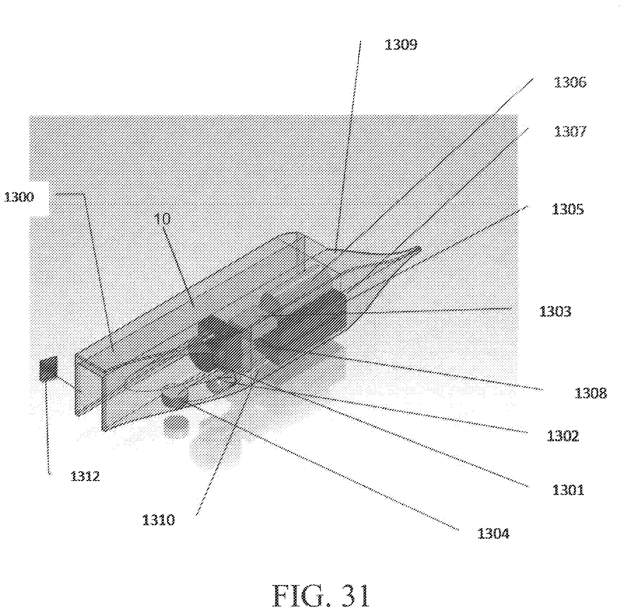

In a thirteenth embodiment and method (see FIGS. 30 and 31) an adapter 1300 includes a photo/video camera 1301, an LED light 1302, a wireless transceiver 1303, a microphone 1304, a speaker 1305, a vibrator 1306, an accelerometer 1307, an audio driver (A/D, Amplifier, D/A etc.) 1308, additional power source 1309, and a smart control surface 1310.

This thirteenth embodiment and method will enable a user to communicate with a wirelessly transmitting device including, but not limited to, a cell phone, a computer, a radio, etc. It will deliver audio to and from the device. The embodiment and method will also supply the ability to amplify sound (known in the art as hearing assist) using only the internal parts such as the microphone 1304, the audio driver/amplifier 1308, and the speaker 1305. This embodiment and method will also enable the user to have a bright LED light 1302 attached, detached or affixed to the device, communicating with the device, and turned on/off using the device and device accessories. This LED light 1302 will be helpful in situations including, but not limited to: reading a book/paper in a dark environment, finding a keyhole in the dark, finding your way in a dark place (stairway, hallway, etc.), etc. Furthermore, this embodiment and method will have a vibrator 1306 for tactile feedback, and to convey messages to the user. Some examples of this are: getting a phone call when your connected phone is silent mode or an emergency call/message in a noisy environment. Another use of this vibrator 1306 is to awake a nodding (falling asleep) driver using tactile feedback as a warning. The device will also include an accelerometer 1307 that will be able to relay the relative acceleration of the device (measure motion).

The thirteenth embodiment and method will also be able to take still images and videos using the built in camera 1301 or any other camera communicating with the device. One way of taking the still picture/video is by swiping the smart control surface 1310 on the device in a predetermined manner; another way of taking a still picture/video is by way of an external communication device that might be able to display the image being taken and save it. This external communication device may include devices including, but not limited to: a cell phone, an operation bracelet, a computer, etc. The camera 1301 can also be used in third party applications including, but not limited to: Facebook^{®}, Twitter^{®}, Instagram^{®}, facial recognition software, etc. The camera 1301 will also be used as a part in the process of contact recognition, as described elsewhere.

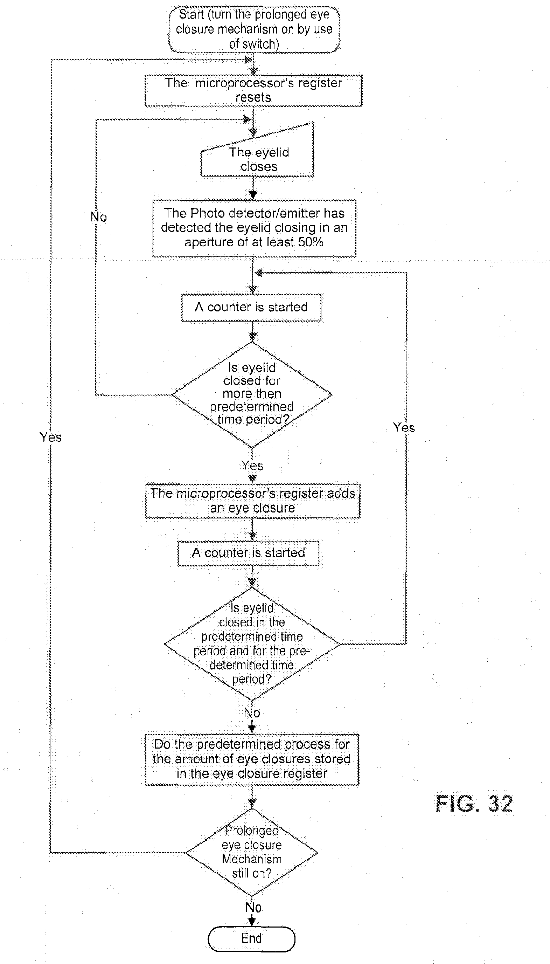

The thirteenth embodiment will furthermore include a sensor; for example, a photo detector/emitter 1311, or a photo detector/emitter mounted on an arm 1312 (see FIG. 31), a mirror mounted in front of the eye with the detector embedded in the adapter 1300, or any combination of the aforementioned, that will be used as a control mechanism. The control mechanism will relay on prolonged eyelid closure (not to be confused with normal blinking) to derive operational orders including but not limited to: answering a phone call in response to a series of prolonged eye closure or a single prolonged eye closure; taking a still picture or video as described in the flow chart of FIG. 32; uploading a picture to, for example: Facebook^{®}, Twitter^{®}, or Instagram^{®} in response to a different series of prolonged eye closures as described in the flow chart of FIG. 32; taking a still picture or video in response to a series of prolonged eye closures or a single prolonged eye closure as described in the flow chart of FIG. 32; etc. the control mechanism is located on or in the surface of the adapter 1300. A timer or timing means is associated with the adapter 1300 to provide the control desired. This embodiment provides the ability for the sensor and timer to distinguish a prolonged eye closure from that of a normal blink. Furthermore, the embodiment allows for a user or wearer of the adapter 1300 to initiate a prolonged eye closure to turn on or off an electrical switch associated with the adapter 1300, the eyewear, or an electrical switch remote from the eyewear or the adapter 1300.

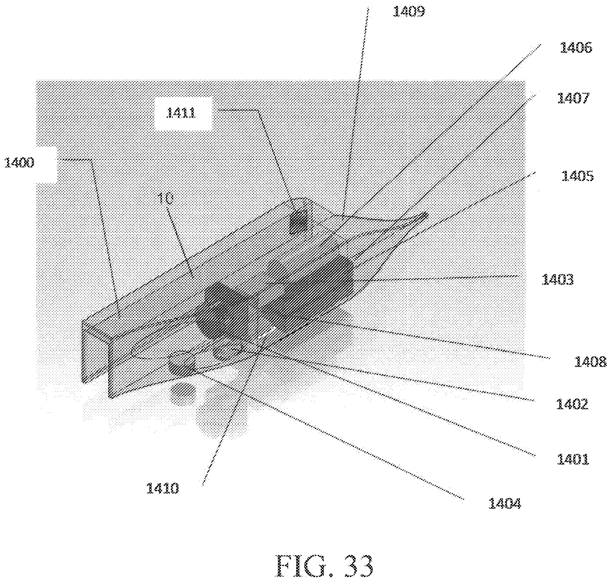

In a fourteenth embodiment and method (see FIGS. 33-35) an adapter 1400 includes a photo/video camera 1401, an LED light 1402, a wireless transceiver 1403, a microphone 1404, a speaker 1405, a vibrator 1406, an accelerometer 1407, an audio driver (A/D, Amplifier, D/A etc.) 1408, additional power source 1409, and a smart control surface 1410.

This fourteenth embodiment and method will enable a user to communicate with a wirelessly transmitting device including, but not limited to, a cell phone, a computer, a radio, etc. It will deliver audio to and from the device. The embodiment and method will also supply the ability to amplify sound (known in the art as hearing assist) using only the internal parts such as the microphone 1404, the audio driver/amplifier 1408, and the speaker 1405. This embodiment and method will also enable the user to have a bright LED light 1402 attached, detached or affixed to the device, communicating with the device, and turned on/off using the device and device accessories. This LED light 1402 will be helpful in situations including, but not limited to: reading a book/paper in a dark environment, finding a keyhole in the dark, finding your way in a dark place (stairway, hallway, etc.), etc. Furthermore, this embodiment and method will have a vibrator 1406 for tactile feedback, and to convey messages to the user. Some examples of this are: getting a phone call when your connected phone is silent mode or an emergency call/message in a noisy environment. Another use of this vibrator 1406 is to awake a nodding (falling asleep) driver using tactile feedback as a warning. The device will also include an accelerometer 1407 that will be able to relay the relative acceleration of the device (measure motion).

The fourteenth embodiment and method will also be able to take still images and videos using the built in camera 1401 or any other camera communicating with the device. One way of taking the still picture/video is by swiping the smart control surface 1410 on the device in a predetermined manner; another way of taking a still picture/video is by way of an external communication device that might be able to display the image being taken and save it. This external communication device may include devices including, but not limited to: a cell phone, an operation bracelet, a computer, etc. The camera 1401 can also be used in third party applications including, but not limited to: Facebook", Twitter^{®}, Instagram^{®}, facial recognition software, etc. The camera 1401 will also be used as a part in the process of contact recognition, as described elsewhere.

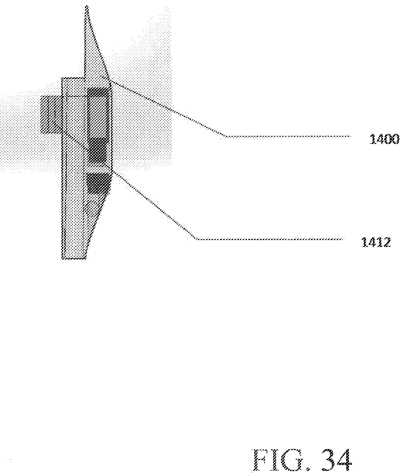

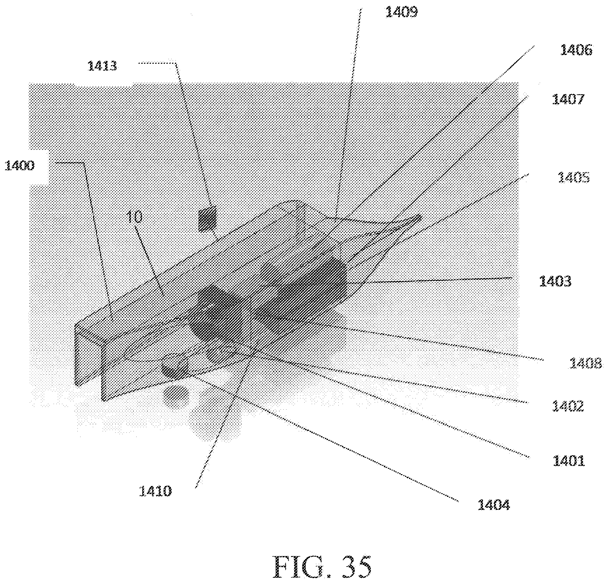

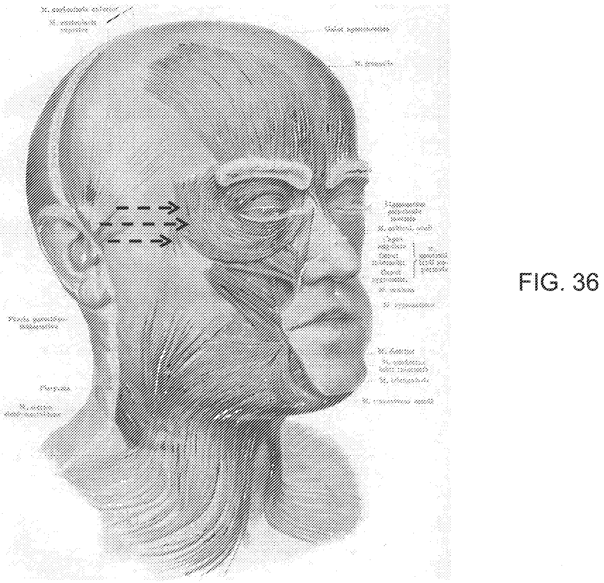

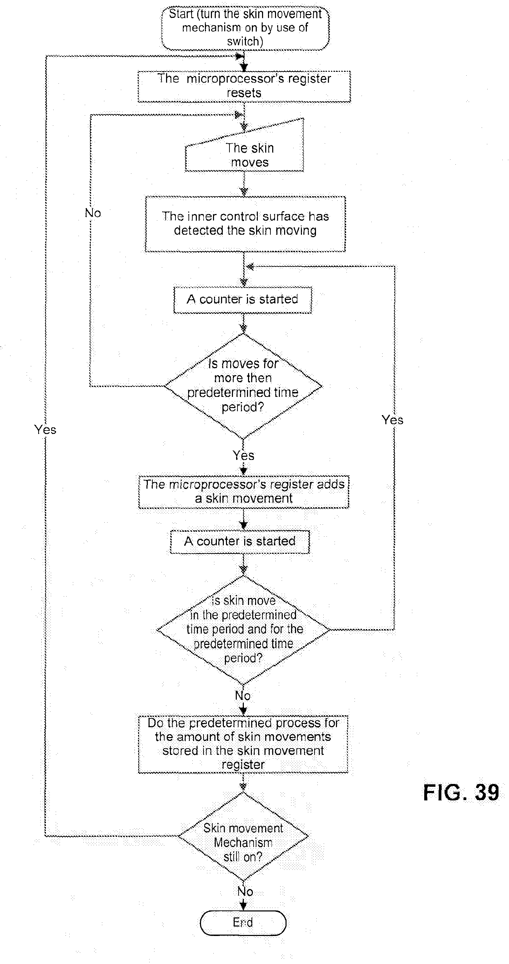

The fourteenth embodiment will furthermore include an inner control surface 1411 connected to or associated with the adapter 1400 or an inner control surface patch 1413 (see FIG. 35) that will be affixed to the face of the user and connected to the adapter 1400 or the control surface of the adapter 1400, or any combination thereof, that will be used as a control mechanism. This inner control surface 1411 can be stacked 1412 (see FIG. 34) in case of, for example: lack of contact with the user's face; insufficient contact with the user's face; etc. The control mechanism will relay on skin movement on the side of the user's face (temporal area) to derive operational orders from the user including but not limited to: answering a phone call in response to a single exaggerated eye closure and opening of an eye or multiple exaggerated eye closures or openings of the eye of a user closest to the adapter 1400; taking a still picture/video movie as described in the flow chart of FIG. 39; uploading a picture to: Facebook^{®}, Twitter^{®}, or Instagram^{®} in response to an exaggerated eye closure or a series of exaggerated eye closures as described in the flow chart of FIG. 39; taking a still picture/video in response to an exaggerated eye closure or a series of exaggerated eye closures as described in the flow chart of FIG. 39; etc. In some embodiments of the invention the control surface can distinguish between that of a normal blink and a forced or exaggerated eye closure that causes the muscles on the temporal side of the user's face to move more than with that of a normal blink of the eye. In most cases the skin in the temporal region of the eye that is closed moves forward towards the eye (see FIG. 36). In the case of this embodiment the normal blink of the wearer is ignored, but with the forced or exaggerated eye closure the movement of the skin located near or around the adapter 1400 which comes in contact with the adapter 1400 control surface can cause a photo, video, or other electronic feature or electronic device of the adapter 1400 to turn on and off or an electronic switch associated with the adapter 1400 to be activated. The resulting action can be that of affecting hardware or software associated with the adapter 1400 to initiate an activity of some kind.

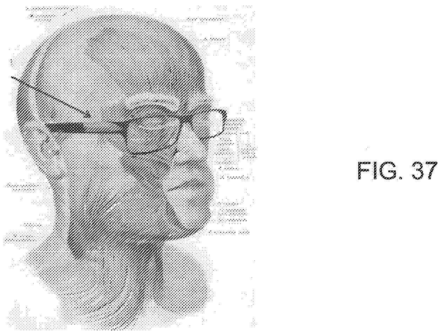

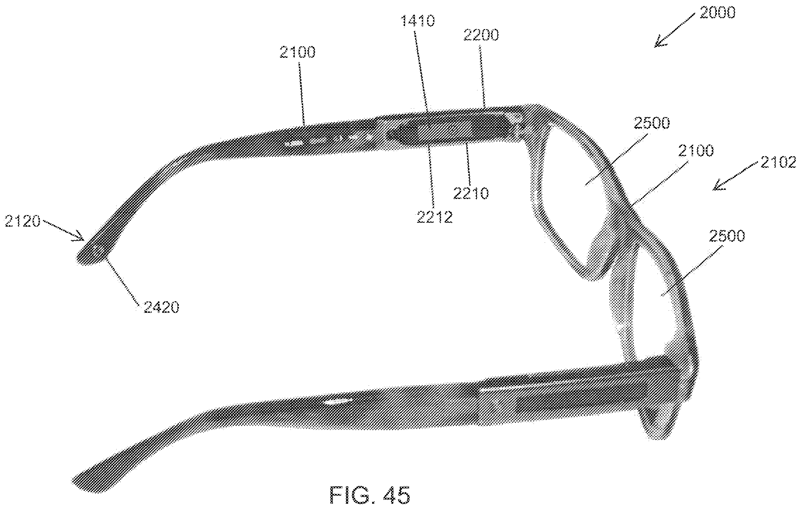

This control surface will be able to feel the motion of the face or skin on the temporal side of the wearer's face when closing and opening the eye of the user closest to the adapter 1400 (see FIGS. 37 and 45), by, for example: touch, change in density of the skin, the movement of the skin, change in conductivity of the skin, change in appearance, etc. The control surface will be in contact with the user's face in order to correctly operate. Such contact can be continuous or periodic at the will of the user. A timing device or timing component located on or connected to the control surface can be associated with the sensing of the skin movement. The adapter 1400 is affixed to eyewear such that the movement of the skin of the wearer's face can be sensed and the adapter 1400 or the eyewear is capable of turning an electrical switch on or off that is located on or in the adapter 1400, eyewear, or remote from the adapter 1400 and eyewear.

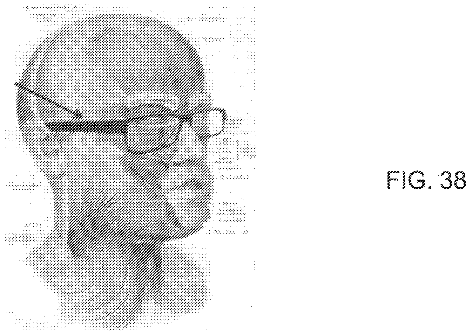

It should be understood that the invention disclosed herein of a control surface (located near or adjacent to the facial skin of the wearer) affixed to an adapter 1400 can also be affixed to the inside of the temple of electronic-enabled eyewear not comprising an adapter (see FIG. 38). As such the eyewear can sense the movement of temporal skin as initiated by the wearer and cause a switch on the eyewear or indirectly remote to the eyewear to turn on or off. Such a switch on the eyewear could, for example, turn on or off an electrically-activated tint for the lens. The control surface can turn on and off, for example, a heads up display; can effect an image shown on the heads up display, such as, for example, an image, illustration, or character displayed with augmented reality; can take a photo, or video; can connect to the Internet; can turn on or off an electrochromic lens; can turn on or off an electro-active focusing lens; can turn on or off audio or a hearing aid; can turn on or off a sensor or a switch, or can perform any of the list of activities, sensing, or applications described elsewhere herein should the appropriate electronics be affixed or built into the eyewear.

To interact with a device remote to the eyewear the eyewear may include a transceiver such as, for example, a BlueTooth^{®} transceiver and the appropriate supporting electronics as taught herein. In some embodiments, a control surface can be spring loaded, or is under a force to press the control surface against the temporal skin of the wearer when wearing eyewear including the control surface located on the inside surface of the eyewear temple closest to the skin of the wearer or on the inside adapter surface closest to the skin of the wearer. This spring loaded effect or any force caused by a mechanical feature that presses the control surface against the temporal skin of the wearer helps to cause the appropriate contact with the skin to effect a good sensing. The sensing can be, for example, a motion sensor, proximity sensor, capacitance sensor, or accelerometer. The switching result can be, for example, due to a capacitance switch located near or connected to the control surface or a membrane switch.

It should be pointed out that the embodiments disclosed within this invention disclosure are not intended to be self-limiting, nor are any dimensions, electrical components or uses. The sensors listed but not shown in the illustrations is specifically included within the invention and depending upon what type of sensing required an appropriate sensor would be included within the adapter, etc. Any components and/or features of any embodiment described herein may be combined with any components of any other embodiment described herein.

### Hearing-Assist Enabled Electronic Eyewear

Hearing aids amplify sounds that improve the quality of life for the user. However, most hearing aids have limitations: the need to replace small batteries weekly, the inconvenience of daily insertion and or wear, removal from the ear canal, the continual buildup of ear wax on the device, difficulty in operating tiny controls that can be hard to manually manipulate especially for the age group needing hearing aids, high cost for the consumer / wearer, and the need to have them prescribed. The cost of hearing aids at $4000-$5000 per pair puts them out of reach for many adults. Even those adults that can afford hearing aids find them inconvenient, expensive, and a hassle.

For these reasons, adults who have mild hearing deficiency, but do not require a hearing aid may never consider a hearing aid and those with moderate, but still mild, hearing loss may shy away from wearing a hearing aid. In fact, there is a significant adult population that has some mild hearing deficiency (either naturally age-related and/or environmentally-caused) that could benefit from some form of a hearing aid, but for reasons previously stated may never avail themselves. Therefore there is a need for a better solution that will allow hearing to be enhanced for the many adults who do not have severe hearing loss and also for the significant number who may have mild hearing loss.

In addition to one's hearing weakening as one enters the 45 year age category, 95% of adults over the age of 40 have presbyopia and need to wear reading glasses. Presbyopia is a condition associated with age that causes one to require reading glasses or multifocal lenses to see clearly at near distances. Embodiments of the invention disclosed herein target those individuals who have presbyopia and those individuals who could also benefit from hearing better. Thus, these individuals may see better and hear better by using some of the embodiments described herein.

Some embodiments of the present invention provide an eyewear system including an eyewear frame including a temple defining a channel, and a tuned port at a rear end of the channel to output sound to assist hearing, and a dock disposed on the temple and configured to receive a hearing assist adapter, wherein the temple is configured to direct acoustic energy to the tuned port.

In some embodiments of the eyewear system, the channel is configured to receive acoustic energy from the hearing assist adapter and emit an audio signal derived from the acoustic energy at the tuned port.

In some embodiments of the eyewear system, it further includes a flexible tube disposed between the tuned port and an ear phone, and wherein the ear phone is coupled to an end of the flexible tube, and wherein the flexible tube is configured to acoustically transmit the audio signal to the ear phone. This may extend and enhance the utility of the device by allowing a user greater ability to direct sound output to the user's ear.

In some embodiments of the eyewear system, the flexible tube is at least partially disposed within the channel, and protrudes from the channel via the tuned port.

In some embodiments of the eyewear system, the ear phone does not include a speaker. This may minimize energy requirements.

In some embodiments of the eyewear system, it further includes the hearing assist adapter.

In some embodiments of the eyewear system, the hearing assist adapter includes a power source.

In some embodiments of the eyewear system, the hearing assist adapter includes a Bluetooth circuit for wireless communication and transmission/reception of audio signals.

In some embodiments of the eyewear system, the hearing assist adapter includes a transceiver.

In some embodiments of the eyewear system, the hearing assist adapter includes a directional microphone for audio capture in an intended direction

In some embodiments of the eyewear system, the hearing assist adapter includes a microphone for audio capture.

In some embodiments of the eyewear system, the hearing assist adapter includes a microprocessor.

In some embodiments of the eyewear system, the hearing assist adapter is configured to attach to the docking station and detach from the docking station (e.g., to allow use only when desired, for remote charging, etc.)

In some embodiments of the eyewear system, the temple includes an ear bud.

In some embodiments of the eyewear system, the temple includes the speaker.

In some embodiments of the eyewear system, the hearing assist adapter is configured to cancel noise using noise cancelation software to enhance a user's understanding and perception of audio communication (e.g., spoken words).

In some embodiments of the eyewear system, the hearing assist adapter comprises an audio amplifier.

In some embodiments of the eyewear system, the temple is configured to cancel noise using noise cancelation software.

In some embodiments of the eyewear system, the temple comprises an audio amplifier.

In some embodiments of the eyewear system, the eyewear comprises an electro-active focusing lens to enhance a user's perception of vision clarity.

In some embodiments of the eyewear system, the dock is disposed on a front portion of the temple.

In some embodiments of the eyewear system, the dock is disposed on a middle portion of the temple.

In some embodiments of the eyewear system, the dock is disposed at a bend in the temple.

In some embodiments of the eyewear system, the dock is disposed on a rear portion of the temple.

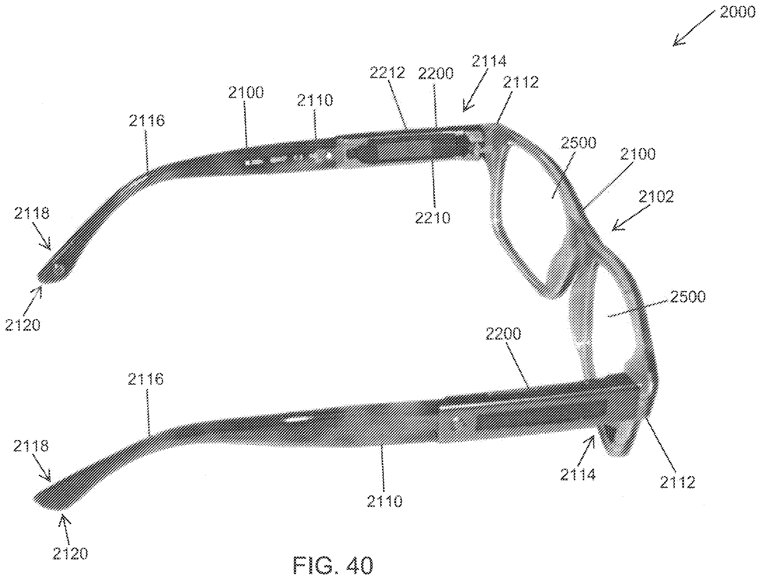

Some embodiments of the invention include an eyewear system 2000 including an eyewear frame 2100 and an adapter 2200. Eyewear frame 2100 (which is defined broadly and includes an eyeglass frame including corrective lenses) may include a temple 2110 with an adapter 2200 that is attachable and detachable from the temple, as shown, for Example, in FIG. 40. The adapter 2200 is located in some embodiments on the proximal end 2112 of the temple 2110 closest to the front 2102 of the frame 2100. The electronic hearing assist adapter 2200 may or may not contain a directional microphone 2210 (including, for example, a microphone directional array) that may or may not be detached from adapter 2200. In some embodiments the electronic hearing assist adapter 2200 is located approximately midway back from front 2114 of the temple 2110. In some embodiments it is located near the bend 2116 of the temple 2110. In some embodiments it is located at the back portion 2118 of the temple 2110 that would line up behind the ear of the wearer.

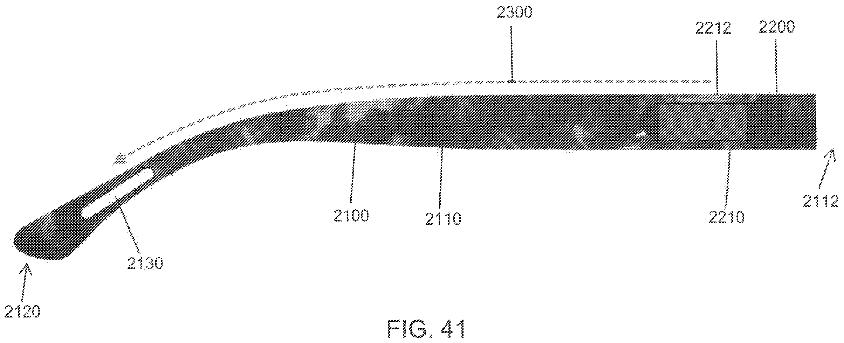

The temple 2110 to which the electronic hearing assist adapter 2200 can be attached in some embodiments is hollow in at least a portion of its temple length, as shown, for Example, in FIG. 41. The hearing assist adapter 2200 in some embodiments is attachable to a docking station located within or on the temple of the eyewear. The hearing assist adapter 2200 may also be detachable from the docking station. A microphone 2210 (including, for example, a microphone directional array) can be attached to either electronic hearing assist adapter 2200 or the eyewear frame 2100 and is oriented to pick up acoustic energy directed toward the wearer's face. The electronic hearing assist adapter 2200 may or may not have its own electrical power source. Such a source can include, for example, a solar cell, a fuel cell, an inductive battery, or a disposable battery. The electronic hearing assist adapter 2200 may or may not include its own chip/microprocessor. The electronic hearing assist adapter 2200 may or may not include an audio amplifier. The electronic hearing assist adapter 2200 may or may not include noise cancelation technology. The temple2110 including the hearing assist adapter 2200 may include noise cancelation software. The temple including the hearing assist adapter 2200 may contain a speaker 2212 (see FIG. 40). The noise cancelation software may be included within any of these elements by, for example, being stored upon a computer-readable medium disposed therein, or accessed and processed by a processor disposed therein.

In some embodiments electronic hearing assist adapter 2200 includes a transceiver to provide wireless communication to and/or from any remote audio device, for example, a television, a computer, a radio, an MP3 player, a phone, or a remote audio device used in a church, a temple, or a movie theater. In some embodiments The electronic hearing assist adapter 2200 can transmit and/or receive audio in accordance with the Bluetooth^{®} protocol (including Bluetooth^{®} Low-Energy) to provide for all of the associated uses and benefits of Bluetooth^{®} for implementing the hearing assist features disclosed herein. In some embodiments, a single hearing assist adapter 2200 can be configured to operate through a single hearing assist temple 2110 or through multiple (e.g., two) hearing assist temples 2110. A hearing assist temple 2110 is a temple 2110 that is configured to enhance the hearing of audio (recorded or live) or other sounds for the wearer of the eyewear frame 2100.

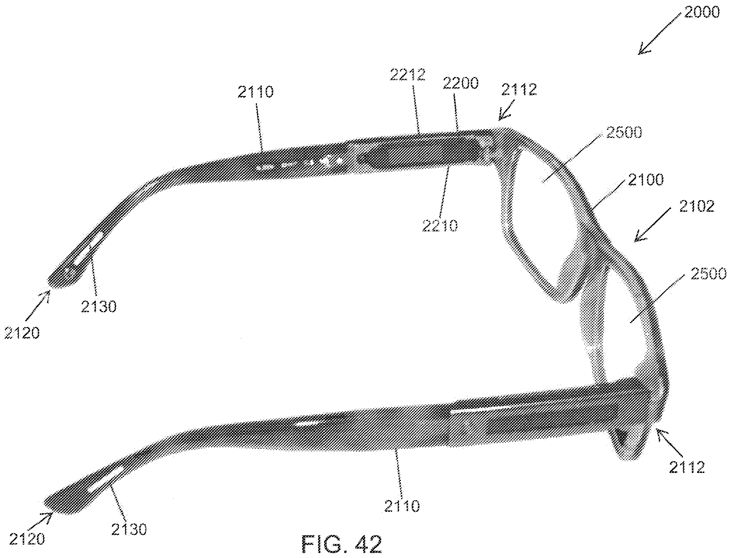

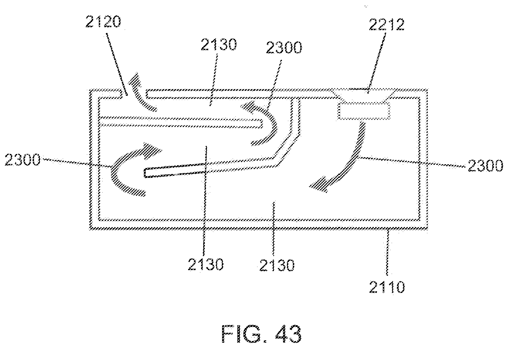

In some embodiments, the electronic hearing assist adapter 2200 contains an analogue to digital (A/D) converter that converts the acoustic energy into electrical impulses. These electrical impulses may be processed or modified with a sound processor (digital or analog). The electrical impulses exiting the sound processor may be fed into a small speaker 2212 within the adapter 2200 (which may, for example, be mounted on or contained within temple 2110). The speaker 2212 may be positioned to focus the acoustic energy into hollow temple 2110 so that sound waves 2300 travel down the hollow temple toward a tuned port 2130 (see FIG. 41). In some embodiments, the temple 2110, with or without channels, may be designed and configured to enhance the sound of the speaker 2212 through a network of channels 2130 within the hollow temple 2110 whereby the tuned port 2130 at the distal end of the temple 2110 emits the audio signal to the wearer (see FIGS. 42 and 43). In some embodiments, the hollow temple 2110 is structured to be an audio transmission line modifying the acoustic energy emitted by the speaker 2212 in the adapter enhancing the frequency response of the internal speaker 2212 (see FIG. 43).

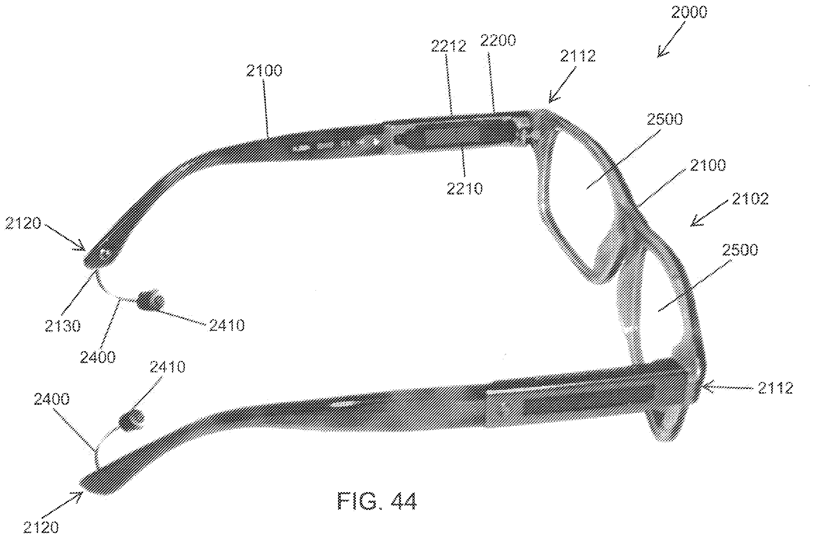

The temple 2110 may or may not contain or be otherwise coupled to a flexible hollow tube 2400 that directs the acoustic energy 2300 from the speaker 2212 in the hearing assist adapter 2200 through a small opening in the distal end 2120 of the temple 2110, called the tuned port 2130, to a small ear plug, ear bud, or ear phone 2410 (all meaning the same for the purposes of this disclosure) that is inserted directly into the ear canal (see FIG. 44). In some embodiments, tube 2400 is rigid, and positioned at a user's ear, or extendable and/or rotatable to be positioned at a user's ear. In some embodiments, tube 2400 is acoustically coupled to the hearing assist adapter 2200.

The temple may or may or may not contain a speaker 2420 built into the distal end 2120 of the temple 2110 that directs amplified and or processed signals from the hearing assist adapter 2200 to the ear and/or through bone conduction (see FIG. 45).

In some embodiments power is supplied by the docking station located in the temple 2110, in some embodiments the electrical hearing assist adapter 2200 provides the electrical power needed, and in some embodiments the electrical power needed is supplied by both the docking station connection and also by power provided by the electrical hearing assist adapter 2200. The outer surface of the temple 2110 may or may not include a capacitive switch activated by the wearer touching the outer surface of the temple 2110. The capacitive touch surface on the outside surface of the temple 2110 may or may not be used as a volume control by swiping a finger front to back or back to front. The docking station may also provide wireless (e.g., Bluetooth^{®}) connectivity to a smartphone, laptop, or desktop computer. Software used with smartphones or laptop computers (e.g., a hearing assist app), can be used to modify the frequency response of the amplified sound with or without using a wireless protocol (e.g., Bluetooth^{®}) to communicate with the sound processor of the hearing assist adapter. Wireless connectivity may be provided by, for example, a wireless (e.g., Bluetooth^{®}) chip or circuit located in the adapter 2200 or eyewear frame 2100.

Some exemplary embodiments include the following configurations:
Hearing assist enabled eyewear including an electronic hearing assist adapter that attaches to a docking station within an eyewear frame.
Hearing assist enabled eyewear including an adapter at least partially embedded within an eyewear frame.
Hearing assist enabled eyewear including an adapter fully embedded within an eyewear frame.
Hearing assist enabled eyewear including an adapter located within one temple.
Hearing assist enabled eyewear where an adapter is located in one temple but is configured to provide hearing assistance for both ears, for example, by being operatively connected to elements (e.g., channels) in both temples in an analog acoustic, wired, or wireless manner.
Hearing assist enabled eyewear including adapters in both temples.
Hearing assist enabled eyewear including a duplex module that includes both lens control and hearing assistance elements configured to provide, respectively, lens control and hearing assistance.
Hearing assist enabled eyewear including ear buds configured to be inserted in the external ear canal of a wearer, and configured to transmit acoustic energy from a speaker in an adapter of the hearing assist enabled eyewear. In some embodiments, there is no speaker in the ear buds.
Hearing assist enabled eyewear including a speaker at an end of an eyewear temple configured to amplify the sound, with or without ear buds.
Hearing assist enabled eyewear including one or more (e.g., two) temples configured to transmit acoustic energy through bone conduction to further enhance hearing.
Hearing assist enabled eyewear including a wireless (e.g., Bluetooth^{®}) receiver connected to an adapter in the frame or docking station configured to receive a digital audio signal from a smartphone, television or movie theater audio system.

Some embodiments of the present invention (including some or all of those described herein) also include or are configured to receive corrective lenses 2500 housed within the eyewear frame 2100 that the electronic hearing assist adapter 2200 resides within or affixes to. The corrective lenses 2500 can be those of any kind, including, for example, conventional corrective lenses and/or dynamic focus corrective lenses such as, for example: fluid lenses, mechanical movement lenses, membrane lenses, and/or electro-active lenses. The invention disclosed herein, however, is not limited to eyewear including corrective lenses.

Sensing and Alarm Synchronization of Mobile Device and Electronic Eyewear

An electronic eyewear system 3000 may include an eyewear frame 3100 and an adapter 3200. An electronic eyewear docking station located on or within the eyewear frame 3100 where different specific adapters 3200 can be inserted or affixed for different applications is described herein. Each adapter provides one or more techniques and components for sensing, such as, for example, a touch sensor, an acoustic sensor, a position sensor, a photo sensor, biometric sensors, and an RF transceiver, and may be configured to initiate one or more applications and/or responses for the wearer based on the type and character of signals detected by the sensors.

Some embodiments of the present invention provide an eyewear system, including an eyewear frame, an adapter coupled to the eyewear frame, and a mobile device separate from the eyewear frame, wherein the adapter includes application software, and wherein the adapter is configured to communicate wirelessly with the adapter via the application software.

In some embodiments of the eyewear system, the adapter includes sensors.

In some embodiments of the eyewear system, the adapter includes alarm components.

In some embodiments of the eyewear system, the adapter includes a wireless antenna.

In some embodiments of the eyewear system, the mobile device includes sensors.

In some embodiments of the eyewear system, the mobile device includes alarm components.

In some embodiments of the eyewear system, the mobile device includes a wireless antenna.

In some embodiments of the eyewear system, the mobile device includes application software configured to wirelessly send a control signal from the mobile device to the adapter. This may help synchronize the mobile device and adapter, to assist in communicating alerts and other signals therebetween.

In some embodiments of the eyewear system, the sensors include one or more of an accelerometer, a gyrosensor, a capacitive touch sensor, an inductive touch sensor, a resistance touch sensor, a pressure sensor, a photo detector, an ultraviolet sensor, a laser sensor, a microphone, a radiation sensor, a magnetic sensor, a temperature sensor, a moisture sensor, an image sensor, a biometric sensor, an RF transceiver, an acoustic or ultrasound radar, and a laser distance sensor.

In some embodiments of the eyewear system, the alarm components include one or more of a speaker, an ear bud, an ear phone, a light emitting diode, a light, a display embedded or projected on an eyeglass lens or a video screen, a motor, a solenoid, an actuator, and piezoelectric component.

In some embodiments of the eyewear system, the adapter and the mobile device are configured to communicate by a wireless protocol including one or more of Bluetooth^{®}, Bluetooth^{®} Low Energy, ZigBee", infrared, laser, radio frequency wave, microwave, ultrasound, and sound.

Some embodiments the user can control actions of the adapter or mobile device by interacting with the sensors, either actively (e.g., by making a gesture sensed by a camera) or passively (e.g., by a heart rate sensor detecting an elevated heart rate of the user above an alert threshold). For example, in some embodiments of the eyewear system, the adapter is configured to trigger one or more alarm components of the adapter in response to a signal received from one or more sensors of the adapter, wherein the signal is based on an action of the wearer, and wherein the action of the wearer is detected by the one or more sensors. Also for example, in some embodiments of the eyewear system, the adapter includes a sensor, wherein the sensor is configured to detect an action of a wearer, and wherein the adapter is configured to send a wireless signal to the mobile device based on the action of the wearer detected by the sensor. Also for example, in some embodiments of the eyewear system, the mobile device is configured to trigger one or more alarm components of the mobile device in response to a signal received from one or more sensors of the mobile device, wherein the signal is based on an action of the wearer, and wherein the action of the wearer is detected by the one or more sensors. Also for example, in some embodiments of the eyewear system, the mobile device includes a sensor, wherein the sensor is configured to detect an action of a wearer, and wherein the mobile device is configured to send a wireless signal to the adapter based on the action of the wearer detected by the sensor.

In some embodiments of the eyewear system, the mobile device is configured to install application software by one or more of a wired connection and a wireless connection.

In some embodiments of the eyewear system, the wireless connection includes a connection to one or more of the Internet, an intranet, and a remote device.

In some embodiments of the eyewear system, the wired connection includes a connection via an input port of the mobile device to one or more of the Internet, an intranet, a remote device, and removable storage.

In some embodiments of the eyewear system, the input port includes one or more of an SD card slot and a USB port.

In some embodiments of the eyewear system, the application software is configured to control sensors of the mobile device, alarm components of the mobile device, and communication via a wireless antenna of the mobile device.

In some embodiments of the eyewear system, the application software is configured to synchronize at least one sensor or alarm component of the adapter with at least one sensor or alarm component of the mobile device.

In some embodiments of the eyewear system, the application software is configured to manage one or more of text messaging, making phone calls, recording audio and video, gaming, visual monitoring, healthcare-related monitoring, user positioning, and receiving and sending messages from the Internet or a phone network.

In some embodiments of the eyewear system, the adapter is configured to trigger one or more functions of the application software based on signals received from sensors of the adapter

In some embodiments of the eyewear system, the one or more functions are triggered using a wireless protocol.

In some embodiments of the eyewear system, at least one function of the adapter is configured to be operated by user input to the mobile device.

In some embodiments of the eyewear system, the at least one function is an alarm function.

In some embodiments of the eyewear system, the mobile device comprises one or more of a laptop computer, a tablet computer, and a mobile phone.

In some embodiments, the electronic eyewear system 3000 may include a mobile device 3300. Mobile devices 3300 such as, for example, a cell phone, tablet computer, or laptop computer and their application software 3310 can provide numerous applications such as, for example, text messaging, voice messaging, alarming, gaming, etc. However, in many cases the user's mobile device 3300 may not be within a reachable distance or may not be heard, therefore the message or communication may not be received by the user promptly. If the communication is of importance to the user, such as, for example, an important call notification of a break-in at the user's home, the user may not be aware of the communication.

By combining both electronic eyewear and mobile devices wirelessly, operations such as, for example, synchronizing the messaging, display and alarms systems of both units, and/or remotely control one device from another device may be achieved, therefore providing more convenience and more reliable and faster communication to the user.

One or more sensors 3210 may be used in the electronic eyewear replaceable adapter 3200 for the electronic eyewear frame 3100, including, for example, an accelerometer, a capacitive touch sensor, an inductive touch sensor, a resistance touch sensor, a microphone, a photo-detector, a video camera, a pressure sensor, a temperature sensor, a moisture sensor, a biometric sensor, an RF transceiver, a laser distance sensor, an accelerometer, a gyrosensor, an ultraviolet sensor, a laser sensor, a radiation sensor, a magnetic sensor, an image sensor, and an acoustic or ultrasound radar.

In some embodiments the sensor 3210 may receive a control signal from the wearer's actions, such as, for example, finger touch, finger press, finger swipe, voice, or body position; or from the wearer's body parameters, such as, for example, body temperature, skin moisture, pulse; or from some other predefined, environmental signals (e.g., that are of importance to the wearer), such as, for example, ultraviolet light intensity, RFID detection, communication signal; or from signals emitted and received by the modules for detecting and/or identifying objects (e.g., by the echo of RF, sound, ultrasound, light, or laser signals bounced from objects (e.g., targets), and the adapter 3200 may process the control signal generated by the sensor 3210, and may activate corresponding functions in response to receipt of the control signal.

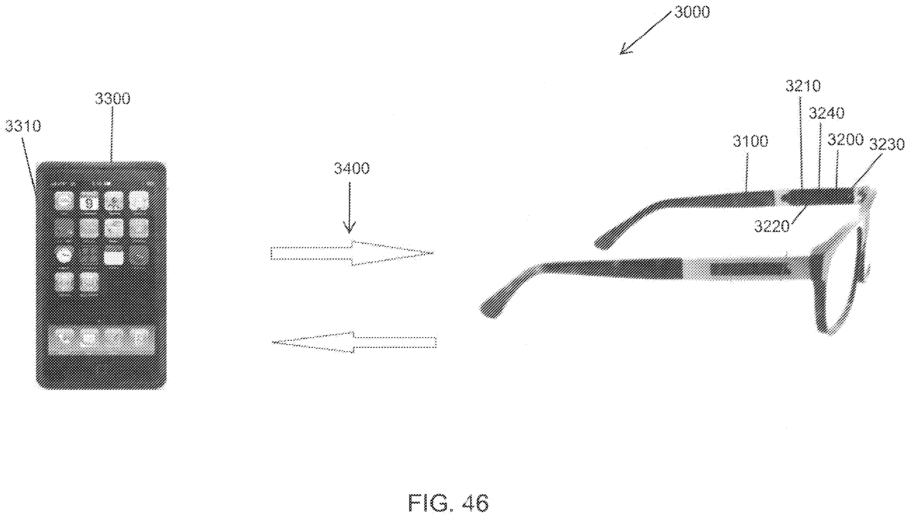

In some embodiments, the adapter 3200 may send a signal wirelessly via a wireless communication component (e.g., a wireless antenna) to a wireless communication component (e.g., a wireless antenna) of the mobile device 3300 (e.g., by wireless transmission 3400 using a wireless protocol such as, for example, Bluetooth^{®}, infrared, or ultrasound) (see FIG. 46), which may trigger actions on mobile device 3300 or other devices, such as, for example, initializing application software 3310 of the mobile device 3300 (e.g., a pre-downloaded application stored in memory of the mobile device 3300), dialing a phone number (e.g., a phone number stored in memory of the mobile device 3300), recording a body parameter of the wearer into a database, or reporting the wearer's data (e.g., data relating to actions, body parameters, environment) to a healthcare provider.

In some embodiments, the application software 3310 on the mobile device 3300 can also send the a control signal to the electronic eyewear adapter 3200 wirelessly and trigger one or more predefined functions of the electronic eyewear adapter 3200 such as, for example, emitting sound (e.g., buzzing) through a speaker 3220 (including, for example, an ear bud or ear phone); outputting a visible alarm 3230 such as an LED, a light, or a display embedded in or projected on the eyeglass lenses or a small video screen; and activating a vibration alarm 3240 such as motor, solenoid, actuator, or piezoelectric component.

For example, in some embodiments, after the application software 3310 wirelessly synchronizes two devices (e.g., the adapter 3200 of the eyewear frame 3100 and the mobile device 3300), the audible, visible, or mechanical alarm systems of both units can work seamlessly together. For example, whenever the synchronized mobile device 3300 is activated by a specific event such as, for example, an incoming call, text message, or timer, the synchronized eyewear frame 3100 will issue a similar alarm to the wearer as well. Because the eyewear frame 3100 is worn by the wearer the alarm and/or signaling components of the adapter 3200 can provide the wearer more reliable awareness of an alarm (and associated event, if applicable) than an unworn mobile device does.

In some embodiments the application software 3310 on mobile device 3300 allows the user to set up a variety of functions such as, for example, dialing one or more stored phone numbers, displaying text messages, initiating an alarm (e.g., by vibration or audible output), gaming, opening a video camera, or recording audio and/or video. These and other functions can be triggered by the user at the mobile device 3300 or at electronic eyewear adapter 3200. It should be understood that application software can be loaded onto the mobile device, the electronic eyewear, or both. Also, in some embodiments application software may be uploaded and/or upgraded from the mobile device 3300 to the eyewear adapter 3200 (e.g., via a wired or wireless connection), therefore always allowing the eyewear adapter 3200 to have the latest applications.

Adapter (e.g., Interactive Master Adapter (IMA)) For Eyewear

In some embodiments of the present invention, an adapter (or, interactive master adapter) can be removably affixed to eyewear, and can expand the capabilities of the eyewear by providing a variety of outputs to a wearer based on inputs received by sensors of the adapter.

Some embodiments of the present invention provide an adapter including a waterproof housing, a switch disposed in or on the housing, and a wireless transceiver disposed within the housing, wherein the adapter is configured to be attachable and removable from eyewear, and wherein the adapter is configured to receive power from a power source separate from the adapter and coupled to the eyewear.

In some embodiments of the adapter, it further includes a camera, wherein the adapter is configured to recognize a person based on an image of the person's face captured by the camera, and wherein the adapter is configured to output a representation of the recognized person's name. This can assist a wearer in recognizing a person they observe.

In some embodiments of the adapter, it further includes a microphone, wherein the adapter is configured to recognize a person based on an audio sample of the person's voice captured by the microphone, and wherein the adapter is configured to output a representation of the recognized person's name. This can assist a wearer in recognizing a person they hear speaking.

In some embodiments of the adapter, it further includes a camera; and a microphone, wherein the adapter is configured to recognize a person based on a combination of an image of the person's face captured by the camera, and an audio sample of the person's voice captured by the microphone, and wherein the adapter is configured to output a representation of the recognized person's name.

In some embodiments of the adapter, the adapter is configured to output the representation of the recognized person's name via a speaker separate from and in communication with the adapter, wherein the speaker is coupled to a frame of the eyewear.

In some embodiments of the adapter, the adapter is configured to interact with third-party apps. This can extend the capability of the adapter to interact with third-party-developed databases or other apps, and can provide a wider data pool to draw from when seeking to recognize a person.

In some embodiments of the adapter, the adapter is configured to communicate with at least one of a cell phone, wrist display, and computer.

In some embodiments of the adapter, it further includes a camera, wherein the adapter is configured to transmit an image captured by the camera to a remote wrist-mountable display for display.

In some embodiments of the adapter, the power source is disposed within a frame of the eyewear.

Some embodiments of the present invention provide an eyewear system including an adapter including a waterproof housing, a switch disposed within the housing, and a wireless transceiver disposed within the housing; and an eyewear frame including a power source disposed within the eyewear frame, wherein the adapter is configured to be attachable and removable from the eyewear frame, and wherein the power source is configured to power the adapter.

In some embodiments of the eyewear system, it further includes a camera, wherein the adapter is configured to recognize a person based on an image of the person's face captured by the camera, and wherein the adapter is configured to output a representation of the recognized person's name.

In some embodiments of the eyewear system, it further includes a microphone, wherein the adapter is configured to recognize a person based on an audio sample of the person's voice captured by the microphone, and wherein the adapter is configured to output a representation of the recognized person's name.

In some embodiments of the eyewear system, it further includes a camera, and a microphone, wherein the adapter is configured to recognize a person based on a combination of an image of the person's face captured by the camera, and an audio sample of the person's voice captured by the microphone, and wherein the adapter is configured to output a representation of the recognized person's name.

In some embodiments of the eyewear system, the adapter is configured to output the representation of the recognized person's name via a speaker separate from and in communication with the adapter, wherein the speaker is coupled to the eyewear frame.

In some embodiments of the eyewear system, the adapter is configured to interact with third-party apps.

In some embodiments of the eyewear system, it further includes at least one of a cell phone, wrist display, and computer, wherein the adapter is configured to communicate with the at least one of the cell phone, wrist display, and computer.

In some embodiments of the eyewear system, it further includes a wrist-mountable display, wherein the adapter further comprises a camera, and wherein the adapter is configured to transmit an image captured by the camera to the remote wrist-mountable display for display.

In some embodiments of the eyewear system, it further includes a remote unit including a display and an input, wherein the adapter further includes a camera, wherein the adapter is configured to transmit an image captured by the camera to the remote unit for display on the display, and wherein the remote unit is configured to transmit a control signal to the adapter to control a function of the camera in response to user manipulation of the input.

In some embodiments of the eyewear system, the power source is disposed within the eyewear frame.

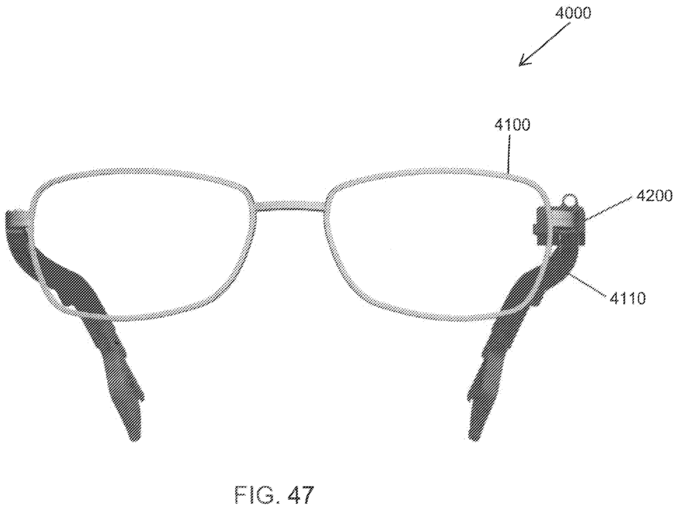

An eyewear system 4000 according to some embodiments of the present invention may include an eyewear frame 4100 and an adapter 4200 coupled to frame 4100. In some embodiments, adapter 4200 is mounted on a front portion of a temple 4110 of frame 4100 (see FIG. 47). In some embodiments, adapter 4200 is waterproof.

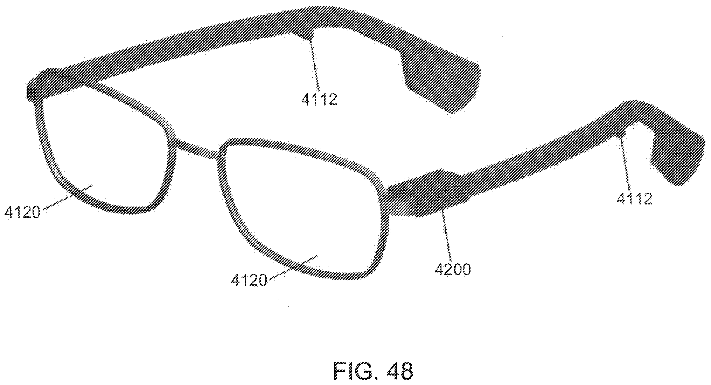

In some embodiments, the eyewear system 4000 includes hearing ports 4112 in the temple 4110 (e.g., in a rear portion of the temple 4110). Hearing ports may output audio signals received from the adapter 4200, to facilitate hearing of the sounds by a wearer (see FIG. 48).

In some embodiments, the eyewear system 4000 includes electro-active lenses and/or electro-chromic lenses 4120, to facilitate multifocal or single vision sight by a wearer (see FIG. 48).

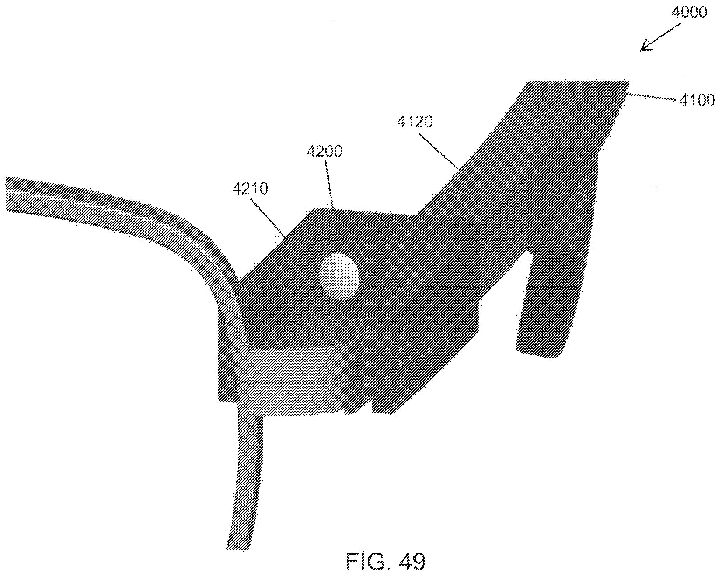

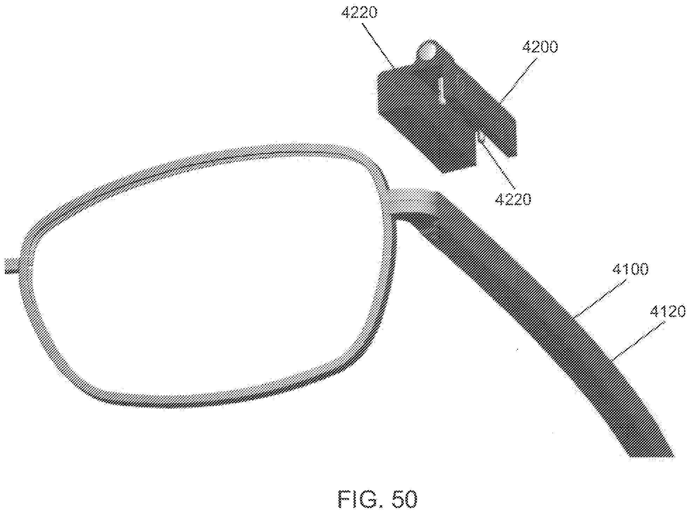

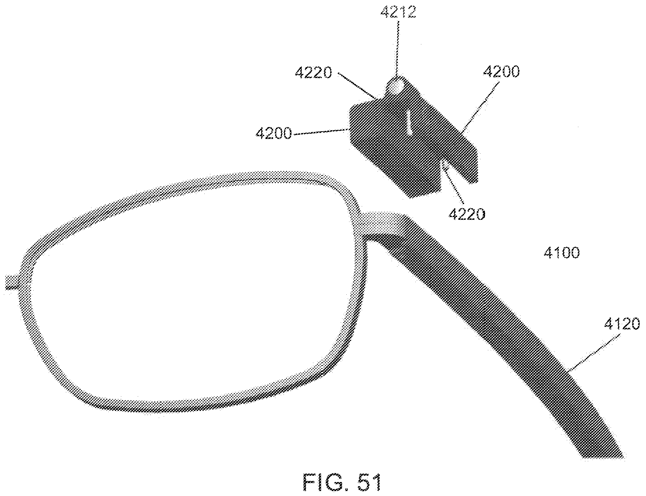

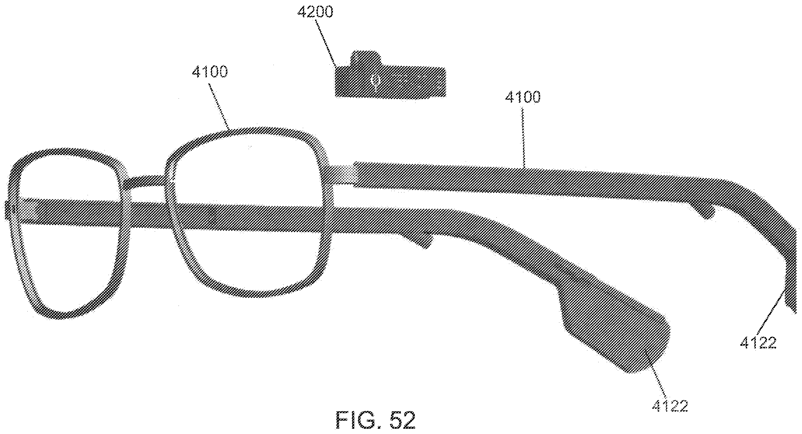

In some embodiments, the adapter 4200 is attachable to and detachable from the eyewear frame 4100 (see FIGS. 49 and 50). In some embodiments, the adapter 4200 includes one or more electronic components 4210 including, for example, a capacitance switch, a Bluetooth^{®} chip, an accelerometer, a microprocessor, a directional microphone, a camera 4212 (see FIG. 51), memory storage, a vibrator, a GPS receiver, a cellular antenna, and a cellular phone (see FIG. 49). In some embodiments, the eyewear frame 4100 includes one or more electronic components 4120 including, for example a power source 4122 (see FIG. 52), a speaker, and electrical conduction components. For example, the power source 4122 may be located in the temple 4110 (e.g., in back of each temple 4110 as shown in FIG. 52), and may be configured to provide power to the adapter 4200. In some embodiments, the power source 4122 may be rechargeable.

In some embodiments, the adapter 4200 may include audio and electrical connectors 4220. The connectors 4220 may be configured to be received by a (female receptacle) dock of the frame 4100 to connect the adapter 4200 to the components 4120 of the frame 4100 (see FIG. 50).

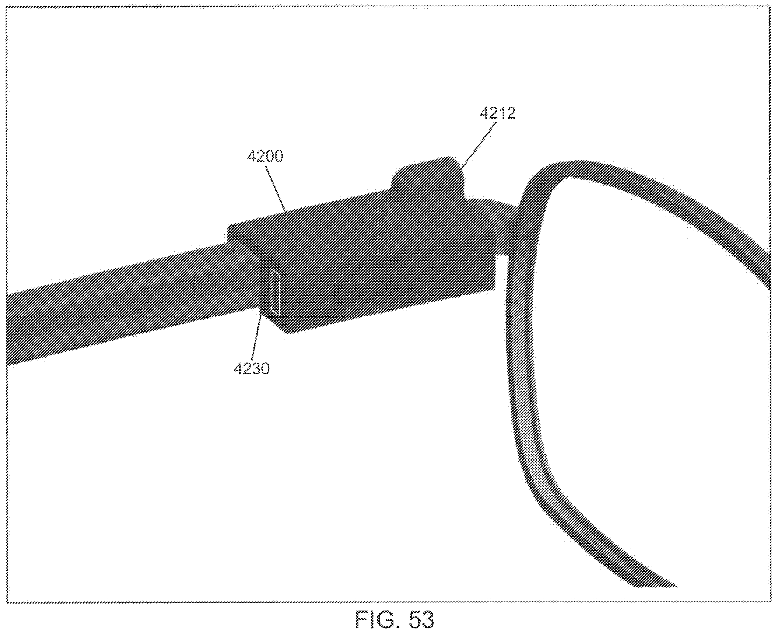

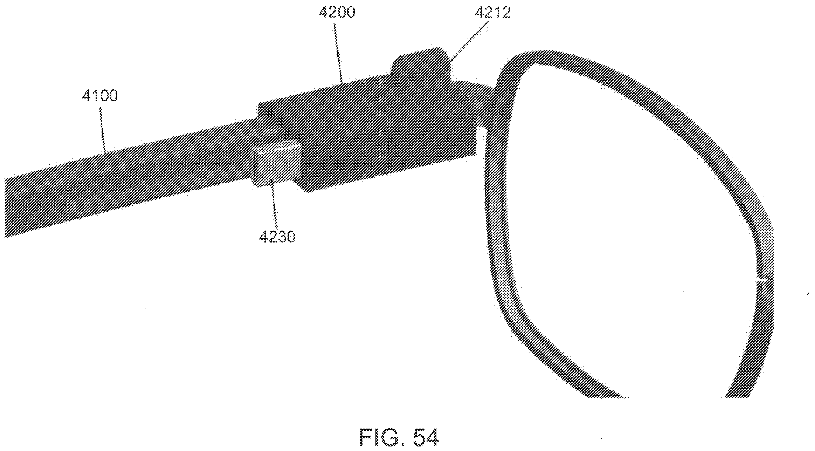

In some embodiments, the adapter 4200 may include a data port 4230 for uploading data to and downloading fata from the adapter 4200. For example, software to control the components 4210 of the adapter 4200 may be uploaded to the adapter 4200 via the data port 4230, and user data such as, for example, images recorded by the camera 4212 may be downloaded via the data port 4230 (e.g., for viewing on a computer or uploading to the Internet). In some embodiments, the data port 4230 may also function as a power port, to provide power to the adapter 4200 from remote sources. In some embodiments, the data port 4230 conforms to a USB (Universal Serial Bus) standard (e.g., the micro USB standard). In some embodiments the data port 4230 may extend for use and retract for storage. FIG. 53 shows the data port 4230 in an extended configuration. FIG. 54 shows the data port 4230 in a retracted configuration.

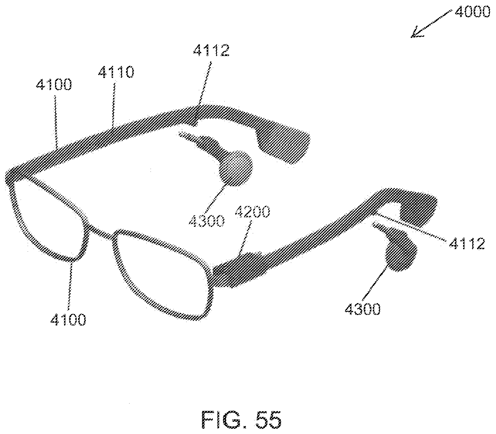

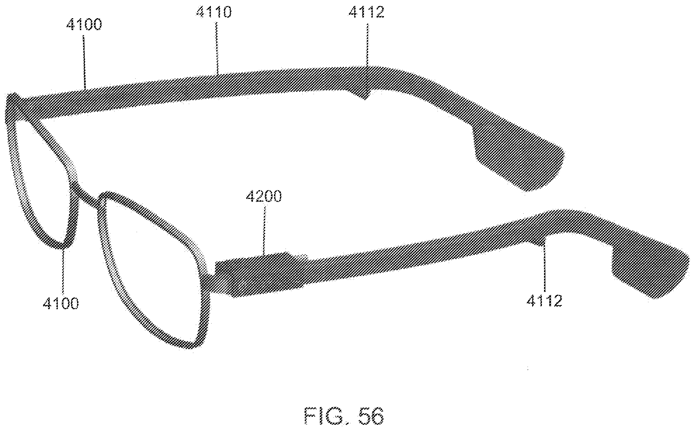

In some embodiments, the eyewear system 4000 may include removable speakers 4300 (see FIG. 55). The speakers 4300 may be, for example, hearing buds. The speakers 4300 may plug into hearing ports 4112 to receive audio signals from the adapter 4200. The hearing ports 4112 may provide support and electrical connectivity to the power speakers 4300. In some embodiments, the speakers 4300 may be self-powered. In some embodiments, however, the hearing ports 4112 function to output audio signals without speakers (see FIG. 56), and/or function as electrical connectors for the speakers 4300 when the speakers 4300 are attached to hearing ports 4112.

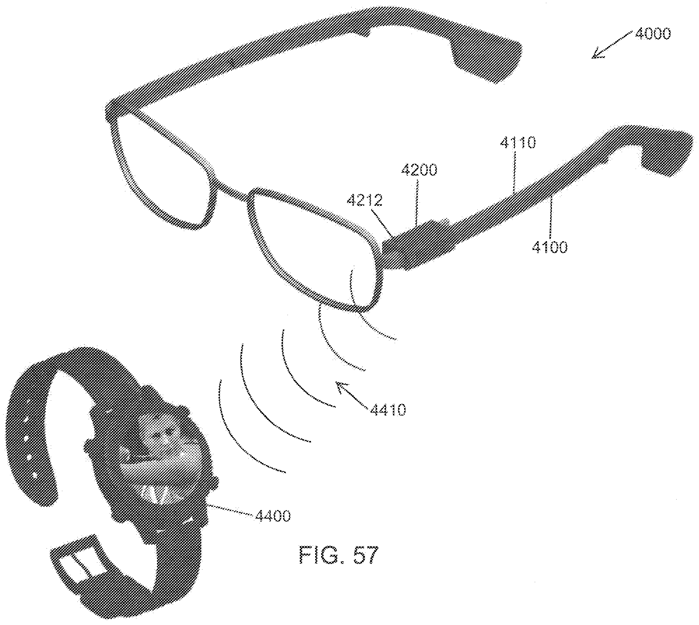

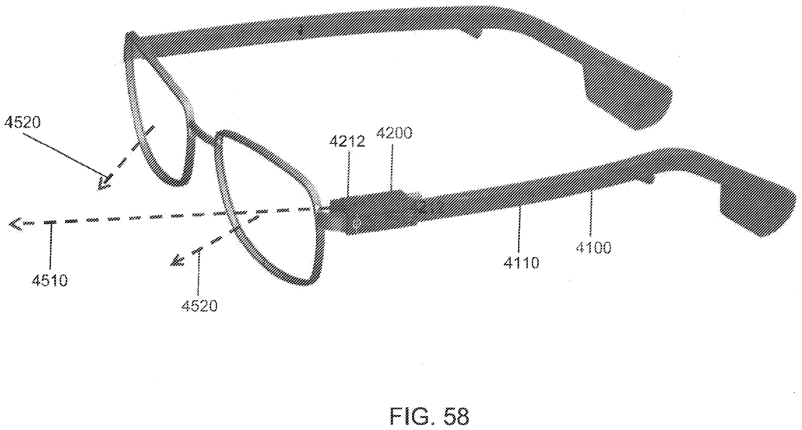

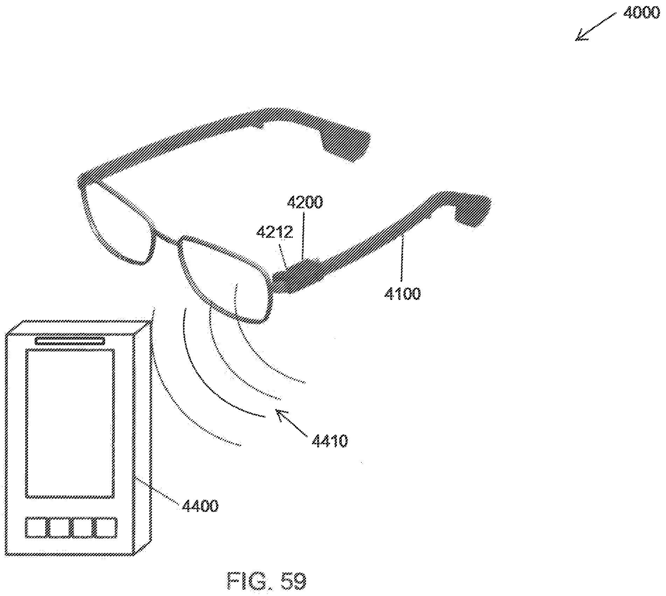

In some embodiments, the eyewear system 4000 may include a remote device 4400. In some embodiments, the adapter 4200 transmits data to the remote device 4400 using a wireless signal 3410. For example, the adapter 4200 may transmit an image to a display of the remote device 4400, for display thereon. The remote device 4400 may be any suitable device, for example, a cellular phone (see FIG. 59), a laptop computer, a desktop computer, a tablet computer, or a wearable electronic device. In some embodiments, the remote display may be a wrist-mounted display (e.g., as shown in FIG. 57). In some embodiments, controls of the remote device 4400 may be manipulated by a user to control operation of the adapter 4200. For example, a user may point his or her head at an object to take a photo of (thereby pointing camera 4212 at the object, see arrow 4510 of FIG. 58), while looking down (see arrows 4520 of FIG. 58) at the display of the remote device 4400, which may be displaying live images captured by the camera, to ensure that the object to photograph is in frame. The user may then press a key on the remote device 4400 may cause the camera 4212 to take a picture. Control signals from the remote device 4400 may be transmitted to the adapter 4200 by the wireless signal 3410, for example. In some embodiments, the adapter 4200 may communicate and interact with third-party apps of the remote device 4400.

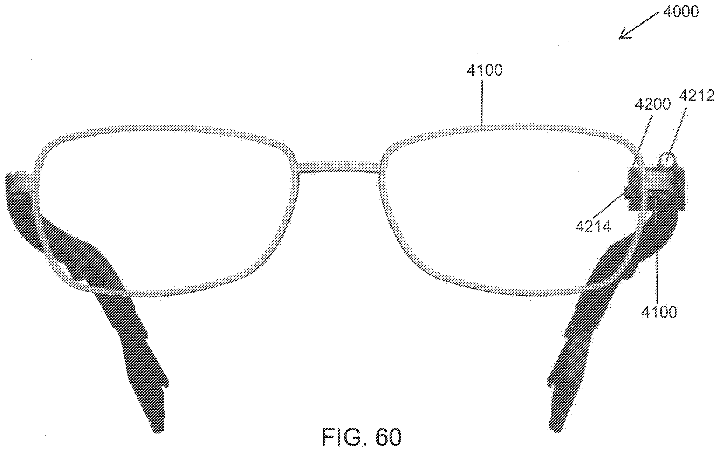

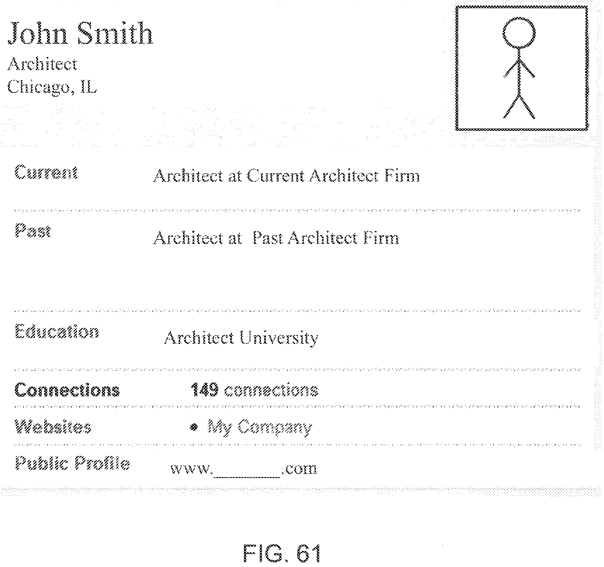

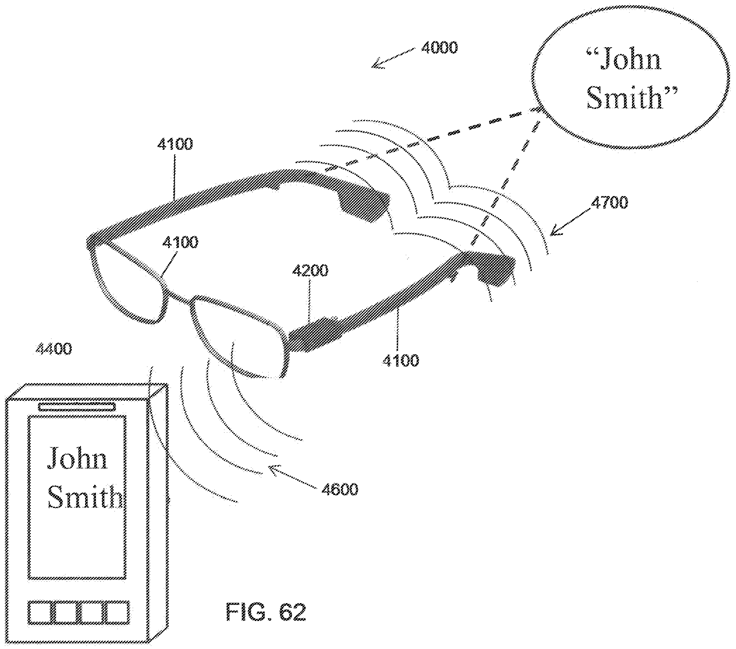

In some embodiments, the eyewear system 4000 (see FIG. 60) is configured to identify a sensed person and communicate the identity of the sensed person to the user of the eyewear system 4000. For example, in some embodiments, the camera 4212 records an image of the sensed person, and/or a microphone 4214 records audio outputted (e.g., spoken) by the sensed person, and sends these recordings to the remote device 4400 (e.g., a cellular (smart)phone). In some embodiments, this data is sent via a wireless transmission 3600 (e.g., Bluetooth") The remote device 4400 may compare the recordings with a database of known persons (e.g., locally or remotely via a connection to the Internet or an intranet) or may send the recordings elsewhere (e.g., to a cloud-based Internet service) for comparison. If the recordings match the face and/or voice of a known person, information about the known person may be transmitted from the remote device 4400 to the adapter 4200 (after being received by the remote device 4400, if necessary) and outputted to the user (e.g., audibly or visually). For example, the hearing ports 4112, the speakers 4300, or speakers of the mobile device 4400 may output an audio signal 3700 of the identified person's name, and/or the remote device 4400 may display the person's name (see FIG. 62). In some embodiments, information about the identified person may be gathered from the Internet (e.g., social media websites such as, for example, Linkedin^{®}, Facebook^{®} Myspace^{®}) (see FIG. 61) and displayed on a display of the remote device 4400 or the adapter 4200 (e.g., projected by a projector of the adapter 4200) (see FIG. 61).

### Eyewear Projecting a Wireless Keyboard

A problem with eyewear including a heads-up display is that by providing a display onto the eyewear the eyewear no longer looks like accepted fashion eyeglasses, but rather a new form of eyewear. Moreover, with displays generally associated with eyewear, there is no easy way to use a keyboard for responding to or initiating an email that also allows for monitoring an image on a display associated with the eyewear. Users typically do not want to carry a separate large keyboard for this purpose, and a small keyboard often will be too small to meet a user's need for a keyboard. A virtual keyboard may be difficult for a user to type on due to a lack of feedback (tactile or acoustic) provided to the user.

Thus there is a need for eyewear that communicates with a keyboard (and vice versa, where the keyboard is small, compact, easy to transport, provides feedback upon typing a key, and is easy to use.

Some embodiments of the present invention provide a simple and convenient keyboard with small and large electronic devices such as, for example, a cell phone, a personal digital assistant (PDA), a tablet, a computer, a laptop, etc. In some embodiments the keyboard is portable, easy to carry, and has a form of sensory response or feedback (tactile or acoustic) to the user. In some embodiments, the keyboard is robust, waterproof, moisture proof, and light weight.

Some embodiments of the present invention provide an eyewear system including a frame, an adapter coupled to the frame, a projector disposed within the adapter, and a feedback mechanism disposed within the adapter, wherein the projector is configured to project a virtual keyboard, and wherein the feedback mechanism is configured to output a feedback signal in response to a user touching a key of the virtual keyboard. In this way, a user may have a projected virtual keyboard available to use, without the need to carry a bulky physical keyboard around, and may receive feedback from typing action on the keyboard via the feedback mechanism.

In some embodiments of the eyewear system, the feedback mechanism includes a vibration actuator, and wherein the feedback signal is vibration from the vibration actuator.

In some embodiments of the eyewear system, the eyewear is configured to provide sensory feedback to the wearer in response to a key of the virtual keyboard being touched.

In some embodiments of the eyewear system, the feedback signal is at least one of a visual signal, a vibration signal, and an acoustic signal.

In some embodiments of the eyewear system, the projector is one of a holographic laser projector, a light-emitting diode projector, and a liquid-crystal display projector.

In some embodiments of the eyewear system, it further includes a second projector.

In some embodiments of the eyewear system, the first projector is configured to project a virtual keyboard, and the second projector is configured to project output of the user's typing on the virtual keyboard.

In some embodiments of the eyewear system, the projector is configured to project a hologram.

In some embodiments of the eyewear system, the projector is configured to project at least one of a black-and-white image, a greyscale image, and a color image.

In some embodiments of the eyewear system, the projector is configured to project at least one of a still image and a video image.

In some embodiments of the eyewear system, the projector is configured to project output of the user's typing on the virtual keyboard on a virtual display associated with the virtual keyboard

In some embodiments of the eyewear system, it further includes a camera disposed within the adapter, wherein the projector is configured to project an image captured by the camera.

In some embodiments of the eyewear system, the adapter is affixed to the eyewear.

In some embodiments of the eyewear system, the adapter is removably coupled to the eyewear.

In some embodiments of the eyewear system, the adapter is waterproof

In some embodiments of the eyewear system, the adapter is moisture-resistant.

Some embodiments of the present invention include an eyewear system 5000 including eyewear 5010 that includes a projector 5210 (e.g., holographic laser projection (HLP), light-emitting diode (LED), liquid-crystal display (LCD), etc.) capable of projecting a virtual keyboard 5300 in the field of view of the eyewear wearer. The projector 5210 can be embedded in eyewear 5010 of any sort (e.g., corrective glasses, sunglasses, protective glasses, prescription and non-prescription etc.), partially embedded in the eyewear 5010, or attached externally to the eyewear 5010 (e.g., to a temple 5110 of a frame 5100 of eyewear 5010. In some embodiments, projector 5210 can be secured to the eyewear 5010 by being housed in housing 5220 of an adapter 5200 that is attachable to and detachable from eyewear 5010. The adapter 5200 can be affixed to any part of the eyewear 5010, including the front 5102 or temple 5110.

In some embodiments the projected virtual keyboard 5300 may be projected from the eyewear frame 5100 onto a surface where the user can type. A feedback (tactile or acoustic) may be provided to the user when a virtual key 5310 is pressed. For example, feedback may be provided by vibration, or audio/acoustic feedback when a key 5310 is typed on the virtual keyboard 5300. In some embodiments the eyewear 5010 includes a vibration actuator 5230 (e.g., within adapter 5200) to provide a vibration when a key 5310 of the virtual keyboard 5300 is touched. In some embodiments a speaker 5240 communicates a sound (e.g., a click, a buzz, a low tone, a middle tone, a high tone, an audio representation of the letter of the alphabet of the key touched by the wearer, an audio representation of the numerical number of the key touched, or an audio representation of the graphical symbol of the key touched). In some embodiments, the speaker 5240 may be, for example, embedded in the eyewear 5010, partially embedded in the eyewear 5010, fully embedded in the eyewear 5010, attached to the eyewear 5010, or wirelessly communicating with the wearer of the eyewear 5010 by, for example, ear buds). In some embodiments, the speaker 5240 may be disposed within the adapter 5200.

In some embodiments, the projector 5210 associated with the eyewear 5010 can be one that projects any image, including that of a hologram. The images can form a still image or a video image. The image can be a 2-dimensional image or a 3-dimensional image. The image can be in color, black-and-white, or greyscale.

In some embodiments, the wearer of the eyewear 5010 not only receives sensory feedback that is synchronized with the virtual keyboard 5300 as he or she strikes a key 5310 of virtual keyboard 5300, but also is able to view what he or she is typing adjacent to the virtual keyboard 5300 by way of either the same projector 5210 (e.g., HLP, LED, LCD etc.) or another projector 5210 (e.g., HLP, LED, LCD, etc.) also embedded in the eyewear 5010, partially embedded in the eyewear 5010, or attached to the eyewear 5010. This visual feedback may be provided with the same projector 5210 by way of a feedback loop, for example.

In some embodiments, when including a second projector 5210, the second projector 5210 may locate its image either in part over the first projector 5210's image or adjacent to the first projector 5210's image. In some embodiments the first projector 5210 projects virtual keyboard 5300 with an outlined space void of an image, and the second projector 5210 locates its image being projected within the outlined space void of an image. In some embodiments the first projector 5210 projects virtual keyboard 5300, and . the second projector 5210 locates its image being projected adjacent to the virtual keyboard 5300 so that it can be easily seen by the wearer of the eyewear 5010. In some embodiments the first projector 5210 projects a virtual keyboard, and the second projector 5210 projects its image such that part of the image is superimposed upon the image of the virtual keyboard 5300.

In some embodiments only one projector 5210 is used to project both the virtual keyboard 5300 and the image that is being typed. In some embodiments, a camera 5250 that is embedded in the eyewear 5010, partially embedded in the eyewear 5010, affixed to the eyewear 5010 or secured to the eyewear by way of the attachable or detachable adapter 5200, is panned (e.g., manually, remotely, wirelessly, etc.) to the object being typed, and then looped back onto the projected image adjacent to the projected virtual keyboard 5300 using either second projector 5210 or first projector 5210. In some embodiments, a live touch screen 5400 that includes a screen 5410, a virtual keyboard 5300, a mouse 5420 etc. may be projected.

In some embodiments the camera 5250 monitors the area of the touch screen 5400 and/or the virtual keyboard 5300 and user interactivity with it. Images of user activity may be processed by image processing software (e.g., stored in a storage medium and operated using a processor, where either or both of the storage medium and processor may be disposed within the adapter 5200 or remote from the adapter 5200 and in communication therewith) to determine the virtual keys or other portions of the screen 5410 touched by the user, in order to both provide output corresponding to touched keys 5310 or portions, and to initiate a sensory response or feedback (tactile or acoustic) to the user in response to the touch (e.g., a key touch on the keyboard 5300).

In some embodiments the projector 5210 and/or the camera 5250 can be housed within adapter housing 5220, affixed to the adapter housing 5220, embedded within the adapter 5200, partially embedded within the adapter 5200, or otherwise secured to the adapter 5200. In some embodiments the adapter 5200 can be attachable or removable from the eyewear 5010. In some embodiments the adapter 5200 can be docked within a docking station located anywhere on the eyewear.

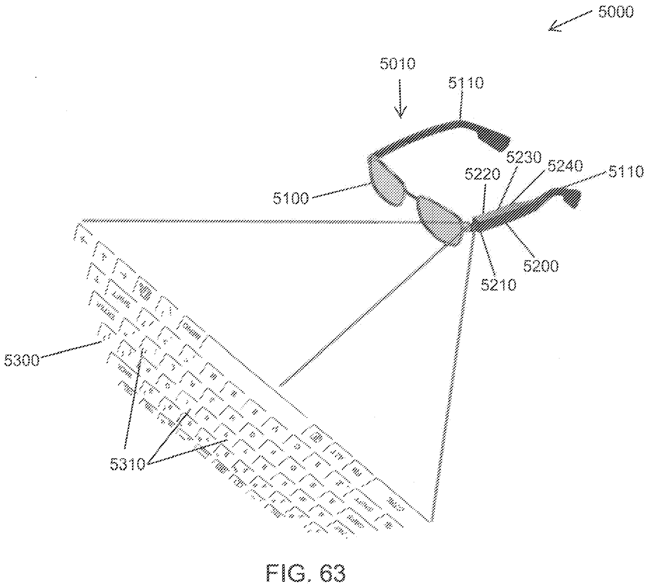

FIG. 63 shows eyewear 5010 including a frame 5100 that includes a first temple piece 5110 and a second temple piece 5110, an adapter 5200 embedded in the eyewear 5010, partially embedded in the eyewear 5010, or attached externally to the eyewear 5010, a projector 5210 (or projectors 5210) embedded in the adapter 5200, and a projected virtual keyboard 5300.

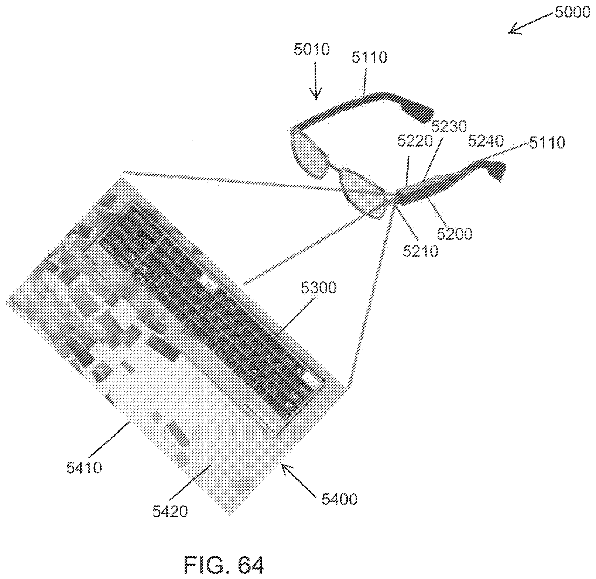

FIG. 64 shows eyewear 5010 including a frame 5100 that includes a first temple piece 5110 and a second temple piece 5110, an adapter 5200 embedded in the eyewear 5010, partially embedded in the eyewear 5010, or attached externally to the eyewear 5010, a projector 5210 (or projectors 5210) embedded in the adapter 5200, and a projected touchpad 5400 including (but not limited to) a virtual keyboard 5300, a virtual display 5410, and a virtual mouse pad 5420.

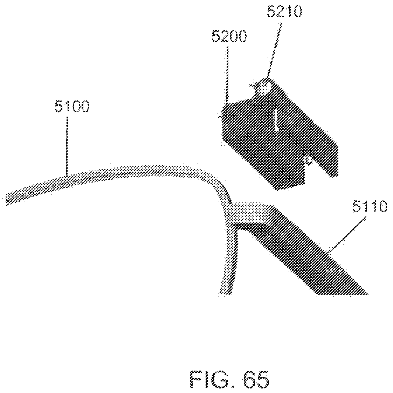

FIG. 65 shows the adapter 5200 in an exemplary arrangement for connecting to the eyewear temple 5110.

The foregoing description of the specific embodiments of the invention described with reference to the figures will so fully reveal the general nature of the invention that others can, by applying knowledge within the skill of the art, readily modify and/or adapt for various applications such specific embodiments, without undue experimentation, without departing from the general concept of the present invention.

While various embodiments of the present invention have been described above, they have been presented for example only, and not limitation. It should be apparent that adaptations and modifications are intended to be within the meaning and range of equivalents of the disclosed embodiments, based on the teaching and guidance presented herein. It therefore will be apparent to one skilled in the art that various changes in form and detail can be made to the embodiments disclosed herein without departing from the spirit and scope of the present invention. The elements of the embodiments presented above are not necessarily mutually exclusive, but may be interchanged to meet various needs as would be appreciated by one of skill in the art.

It is to be understood that the phraseology or terminology used herein is for the purpose of description and not of limitation. The breadth and scope of the present invention should not be limited by any of the above-described exemplary embodiments, but should be defined only in accordance with the following claims and their equivalents.

## Claims

1. An eyewear system (2000) comprising:
an eyewear frame (2100);
a hearing assist adapter (2200) located on a temple (2110) of the eyewear frame and including a microphone (2210) oriented to pick up acoustic energy directed to a wearer of the eyewear system; and
a speaker (2212) built into a distal end (212) of the temple and configured to direct amplified and/or processed signals from the hearing assist adapter to an ear of the wearer and/or through bone conduction.

2. The eyewear system of claim 1, wherein the hearing assist adapter is configured to attach to a docking station within or on the eyewear frame and detach from the docking station in the eyewear frame.

3. The eyewear system of claim 1, wherein the hearing assist adapter is located at a proximal end (2112) of the temple closest to the front (2102) of the eyewear frame, midway back from the front (2114) of the temple, near a bend (2116) of the temple, or at a back portion (2118) of the temple.

4. The eyewear system of claim 1, wherein the speaker is at an end of an eyewear temple of the eyewear frame.

5. The eyewear system of claim 1, further comprising:
ear buds configured to be inserted into an external ear canal of the wearer and to transmit acoustic energy from the speaker.

6. The eyewear system of claim 1, wherein the hearing assist adapter is at least partially embedded within the eyewear frame.

7. The eyewear system of claim 1, wherein the hearing assist adapter is fully embedded within the eyewear frame.

8. The eyewear system of claim 1, wherein the hearing assist adapter comprises a transceiver to provide wireless communication to and/or from a remote audio device, and, optionally, wherein the remote audio device comprises one of a television, a computer, a radio, an MP3 player, a phone, or a remote audio device used in a church, a temple, or an entertainment venue.

9. The eyewear system of claim 1, further comprising:
a wireless chip or circuit located in the hearing assist adapter or eyewear frame to provide wireless connectivity.

10. The eyewear system of claim 1, further comprising:
a duplex module comprising lens control and hearing assistance elements configured to provide, respectively, lens control and hearing assistance.

11. The eyewear system of claim 1, further comprising:
one or more temples configured to transmit acoustic energy through bone conduction.

12. The eyewear system of any of the preceding claims, wherein the hearing assist adapter includes at least one of:
a Bluetooth circuit for wireless communication and transmission/reception of audio signals;
a transceiver;
a microphone for audio capture; or
a microprocessor.

13. The eyewear system of any of the preceding claims, wherein at least one of the temple or the hearing assist adapter is configured to cancel noise to enhance a user's understanding and perception of audio communication.

14. The eyewear system of any of the preceding claims, wherein at least one of the temple or the hearing assist adapter comprises an audio amplifier.

15. The eyewear system of any of the preceding claims, further comprising:
an electro-active focusing lens.
